# EUROPEAN PATENT APPLICATION

(11) **EP 2 863 716 A1**
(43) Date of publication of application: **22.04.2015**
(21) Application number: 13804702.2
(22) Date of filing: 14.06.2013
(51) Int. Cl.: H05B 37/02

(54) **ENERGY-SAVING LIGHT POWER SUPPLY MODULE**

(30) Priority: 14.06.2012 CN 201220284181 U
(71) Applicant: Tzeng, Jiun-Chau, Zhongshan, Guangdong 528415 (CN); Hsu, Hsiu-Yu, Taipei City 11286 (TW)
(72) Inventor: TZENG, Jiun-Chau, Zhongshan City, Guangdong 528415 (CN)
(74) Representative: 2K Patentanwälte Blasberg Kewitz & Reichel
(86) International application number: PCT/CN2013/077248
(87) International publication number: WO 2013/185631

(57) **Abstract**

A power supply module 70 is applied to a rectifier 40, a switching apparatus 10 and an energy saving lamp 52. The power supply module 70 includes a power processing unit 742 and a state potential unit 744. The power processing unit742 outputs a required power to the energy saving lamp 52. The state potential unit 744 is configured to provide the power processing unit742 with a normal state potential required in a normal operation of the power processing unit742, or the state potential unit 744 is configured to respond to an abnormal state potential in an abnormal operation of the power processing unit742.The power supply module 70 can be applied to the switching apparatus 10 which has low cost and low power consumption and high reliability.

## Description

### BACKGROUND OF THE INVENTION

### FIELD OF THE INVENTION

The present invention relates to a power supply module, and especially relatestoa power supply module forenergysaving lamps.

### DESCRIPTION OF THE RELATED ART

As the global awareness of environmental protection is increasing gradually, in the near future, incandescent lamps will be replaced by energy saving lamps (for examples, fluorescent lamps or light emitting diode lamps). For these energy saving lamps, the power supply modules for the fluorescent lampsare generally called ballasts. The power supply modules for the light emitting diode lampsare generally called drivers.

Fluorescent lampsand light emitting diode lamps have different advantages respectively. Fluorescent lamps have the advantage of high brightness and are suitable for reading. Light emitting diode lamps are suitable for, such as sleeping, which does not require high brightness. In order to satisfy both conditions, a switching apparatus for switching between the fluorescent lamp andthe light emitting diode lamp is provided in the market. Namely, the user can control the switching apparatus to switch to use the fluorescent lamp or the light emitting diode lamp.

However, the switching apparatus mentioned above usually comprises a relay and related circuits for switching, which have higher cost and higherpower consumption (about 3∼5 mA) but lower reliability. Moreover, the power supply module which is used for the switching apparatus mentioned above can be applied to the switching apparatus mentioned above only, which has higher cost and higherpower consumption but lower reliability.

### SUMMARY OF THE INVENTION

In order to solve the above-mentioned problems, an object of the present invention is to provide a power supply module for an energysaving lamp.

In order to achieve the object of the present invention mentioned above, the power supply module is applied to a rectifier, a switching apparatus and the energy saving lamp. The power supply module comprises a power processing unit and a state potential unit. The power processing unit is electrically connected to the rectifier and the energy saving lamp. The state potential unit is electrically connected to the switching apparatus and the power processing unit. The power processing unit outputs a required power to the energy saving lamp. The state potential unitis configured to provide the power processing unit with a normal state potentialrequired in a normal operation of the power processing unit, or the state potential unit is configured torespond to an abnormal state potential in an abnormal operation of the power processing unit.

Moreover, the state potential unit comprises an isolationcontrol interface electrically connected to the switching apparatus.

Moreover, the power processing unit comprises a diode, an input side filtering capacitor and a power conversion unit. An anode of the diode is electrically connected to the rectifier. The input side filtering capacitor is electrically connected to a cathode of the diode. The power conversion unit is electrically connected to the input side filtering capacitor and the energy saving lamp. The state potential unit further comprises a starting unit and a starting input side. The starting unit is electrically connected to the rectifier and the anode of the diode. The starting input side is electrically connected to the starting unit, the power conversion unit and the isolationcontrol interface.

Moreover, the power processing unit comprises a diode, an input side filtering capacitor and a power conversion unit. An anode of the diode is electrically connected to the rectifier. The input side filtering capacitor is electrically connected to a cathode of the diode. The power conversion unit is electrically connected to the input side filtering capacitor and the energy saving lamp. The state potential unit further comprises anunder-voltage lockout detection unit and an under-voltage lockout input side. The under-voltage lockout detection unit is electrically connected to the rectifier and the anode of the diode. The under-voltage lockout input side is electrically connected to the under-voltage lockout detection unit, the power conversion unit and the isolationcontrol interface.

Moreover, the power processing unit comprises a diode, an input side filtering capacitor and an electronic switch. An anode of the diode is electrically connected to the rectifier. The input side filtering capacitor is electrically connected to a cathode of the diode and the energy saving lamp. The electronic switch is electrically connected to the energy saving lamp. The state potential unit further comprises a bias unit and a switch control input side. The bias unit is electrically connected to the rectifier and the anode of the diode. The switch control input side is electrically connected to the bias unit, the electronic switch and the isolationcontrol interface.

Moreover, the power processing unit comprises a power conversion unit electrically connected to the rectifier and the energy saving lamp. The state potential unit further comprises a starting input side electrically connected to the power conversion unit and the isolationcontrol interface.

Moreover,the power processing unit comprises a power conversion unit electrically connected to the rectifier and the energy saving lamp. The state potential unit further comprises an under-voltage lockout input side electrically connected to the power conversion unit and the isolationcontrol interface.

Moreover, the power processing unit comprises a power conversion unit electrically connected to the rectifier and the energy saving lamp. The state potential unit further comprises an over voltage protection input side electrically connected to the power conversion unit and the isolationcontrol interface.

Moreover, the power processing unit comprises a power conversion unit electrically connected to the rectifier and the energy saving lamp. The state potential unit further comprises an over currentprotection input side electrically connected to the power conversion unit and the isolationcontrol interface.

Moreover, the power processing unit comprises an electronic switch electrically connected to the rectifier and the energy saving lamp. The state potential unit further comprises a switch control input side electrically connected to the electronic switch and the switching apparatus.

Moreover, the power processing unit comprises a diode, a power factor corrector and a power conversion unit. An anode of the diode is electrically connected to the rectifier. The power factor corrector is electrically connected to a cathode of the diode. The power conversion unit is electrically connected to the power factor corrector and the energy saving lamp. The state potential unit further comprises a starting unit and a starting input side. The starting unit is electrically connected to the rectifier and the anode of the diode. The starting input side is electrically connected to the starting unit, the power conversion unit and the isolationcontrol interface.

Moreover, the power processing unit comprises a diode, a power factor corrector and a power conversion unit. An anode of the diode is electrically connected to the rectifier. The power factor corrector is electrically connected to a cathode of the diode. The power conversion unit is electrically connected to the power factor corrector and the energy saving lamp. The state potential unit further comprises anunder-voltage lockout detection unit and an under-voltage lockout input side. The under-voltage lockout detection unit is electrically connected to the rectifier and the anode of the diode. The under-voltage lockout input side is electrically connected to the under-voltage lockout detection unit, the power conversion unit and the isolationcontrol interface.

Moreover, the power processing unit comprises a power factor corrector and a power conversion unit. The power factor corrector is electrically connected to the rectifier. The power conversion unit is electrically connected to the power factor corrector and the energy saving lamp. The state potential unit further comprises a starting unit and a starting input side. The starting unit is electrically connected to the rectifier and the power factor corrector. The starting input side is electrically connected to the starting unit, the power conversion unit and the isolationcontrol interface.

Moreover, the power processing unit comprises a power factor corrector and a power conversion unit. The power factor corrector is electrically connected to the rectifier. The power conversion unit is electrically connected to the power factor corrector and the energy saving lamp. The state potential unit further comprises anunder-voltage lockout detection unit and an under-voltage lockout input side. The under-voltage lockout detection unit is electrically connected to the rectifier and the power factor corrector. The under-voltage lockout input side is electrically connected to the under-voltage lockout detection unit, the power conversion unit and the isolationcontrol interface.

Moreover, the power processing unit comprises a boost active power factor corrector and a power conversion unit. The boost active power factor corrector is electrically connected to the rectifier. The power conversion unit is electrically connected to the boost active power factor corrector and the energy saving lamp. The state potential unit further comprises a starting unit and a starting input side. The starting unit is electrically connected to the boost active power factor corrector. The starting input side is electrically connected to the starting unit, the power conversion unit and the isolationcontrol interface. The boost active power factor corrector comprises a control module, a boost diode and an energystorage capacitor. The control module is electrically connected to the rectifier and the starting unit. An anode of the boost diode is electrically connected to the control module and the starting unit. The energystorage capacitor is electrically connected to a cathode of the boost diode and the power conversion unit.

Moreover, the power processing unit comprises a boost active power factor corrector and a power conversion unit. The boost active power factor corrector is electrically connected to the rectifier. The power conversion unit is electrically connected to the boost active power factor corrector and the energy saving lamp. The state potential unit further comprises anunder-voltage lockout detection unit and an under-voltage lockout input side. The under-voltage lockout detection unit is electrically connected to the boost active power factor corrector. The under-voltage lockout input side is electrically connected to the under-voltage lockout detection unit, the power conversion unit and the isolationcontrol interface. The boost active power factor corrector comprises a control module, a boost diode and an energystorage capacitor. The control module is electrically connected to the rectifier and the under-voltage lockout detection unit. An anode of the boost diode is electrically connected to the control module and the under-voltage lockout detection unit. The energystorage capacitor is electrically connected to a cathode of the boost diode and the power conversion unit.

The power supply module of the present invention can be applied to the switching apparatus which has low cost and lowpower consumptionand high reliability.

### BRIEF DESCRIPTION OF DRAWING

Fig. 1 shows a block diagram of the power supply module of the present invention.
Fig. 2 shows a block diagram of the bi-stable multi-vibrator, the initial state selector and peripheral circuits.
Fig. 3 shows a block diagram of the electrical energy storage unit.
Fig. 4 shows a block diagram of the first embodiment of the power supply module of the present invention.
Fig. 5 shows a block diagram of the second embodiment of the power supply module of the present invention.
Fig. 6 shows a block diagram of the third embodiment of the power supply module of the present invention.
Fig. 7 shows a block diagram of the fourth embodiment of the power supply module of the present invention.
Fig. 8 shows a block diagram of the fifth embodiment of the power supply module of the present invention.
Fig. 9 shows a block diagram of the sixth embodiment of the power supply module of the present invention.
Fig. 10 shows a block diagram of the seventh embodiment of the power supply module of the present invention.
Fig. 11 shows a block diagram of the eighth embodiment of the power supply module of the present invention.
Fig. 12 shows a block diagram of the ninth embodiment of the power supply module of the present invention.
Fig. 13 shows a block diagram of the tenth embodiment of the power supply module of the present invention.
Fig. 14 shows a block diagram of the eleventh embodiment of the power supply module of the present invention.
Fig. 15 shows a block diagram of the twelfth embodiment of the power supply module of the present invention.
Fig. 16 shows a block diagram of the thirteenth embodiment of the power supply module of the present invention.
Fig. 17 shows a block diagram of the fourteenth embodiment of the power supply module of the present invention.
Fig. 18 shows a circuit diagram of the rectifier.
Fig. 19 shows a circuit diagram of the first embodiment of the connection of the initial state selector.
Fig. 20 shows a circuit diagram of the second embodiment of the connection of the initial state selector.
Fig. 21 shows a circuit diagram of the third embodiment of the connection of the initial state selector.
Fig. 22 shows a circuit diagram of the fourth embodiment of the connection of the initial state selector.
Fig. 23 shows a circuit diagram of the first embodiment of Fig. 4.
Fig. 24 shows a circuit diagram of the second embodiment of Fig. 4.
Fig. 25 shows a circuit diagram of the third embodiment of Fig. 4.
Fig. 26 shows a circuit diagram of the fourth embodiment of Fig. 4.
Fig. 27 shows a circuit diagram of an embodiment of Fig. 5.
Fig. 28 shows a circuit diagram of an embodiment of Fig. 6.
Fig. 29 shows a circuit diagram of an embodiment of Fig. 7.
Fig. 30 shows a circuit diagram of an embodiment of Fig. 9.
Fig. 31 shows a circuit diagram of an embodiment of Fig. 11.
Fig. 32 shows a circuit diagram of the first embodiment of Fig. 12.
Fig. 33 shows a circuit diagram of the second embodiment of Fig. 12.
Fig. 34 shows a circuit diagram of an embodiment of Fig. 13.
Fig. 35 shows a circuit diagram of an embodiment of Fig. 15.
Fig. 36 shows a circuit diagram of an embodiment of Fig. 16.
Fig. 37 shows a circuit diagram of an embodiment of Fig. 17.
Fig. 38 shows a circuit diagram of an embodiment of the diode type isolationcontrol interface of Figs. 4∼8 and 12∼17.
Fig. 39 shows a circuit diagram of an embodiment of the diode type isolationcontrol interface of Figs. 9∼10.

### MAIN COMPONENTS SYMBOLS

Switching apparatus 10
Electrical energy storage unit 102
Seventh resistor 10202
Eighth resistor 10204
Third capacitor 10206
Third diode 10208
Fourth capacitor 10210
Zener diode 10212
Bi-stable multi-vibrator 104
First resistor 10402
Second resistor 10404
First transistor 10406
Second transistor 10408
Third resistor 10410
Fourth resistor 10412
First diode 10414
Second diode 10416
Fifth resistor 10418
Sixth resistor 10420
First capacitor 10422
Second capacitor 10424
Initial state selector 106
Initial state capacitor 10602
Switching signal input side 108
Alternating current power supply apparatus 20
Switch 30
Rectifier 40
First energy saving lamp 50
Energy saving lamp 52
Second energy saving lamp 60
First power supply module 70
Diode 702
Input side filtering capacitor 704
Power conversion unit 706
Starting unit 708
Starting input side 710
Isolation control interface 712
Electronic switch 718
Bias unit 720
Switch control input side 722
Over voltage protection input side 724
Over current protection input side 726
Power factor corrector 728
Under-voltage lockout detection unit 730
Under-voltage lockout input side 732
Boost active power factor corrector 734
Control module 736
Boost diode 738
Energy storage capacitor 740
Power processing unit 742
State potential unit 744
Second power supply module 80

### DETAILED DESCRIPTION OF THE INVENTION

Please refer to following detailed description and figures for the technical content of the present invention. The following detailed description and figures are referred for the present invention, but the present invention is not limited to it.

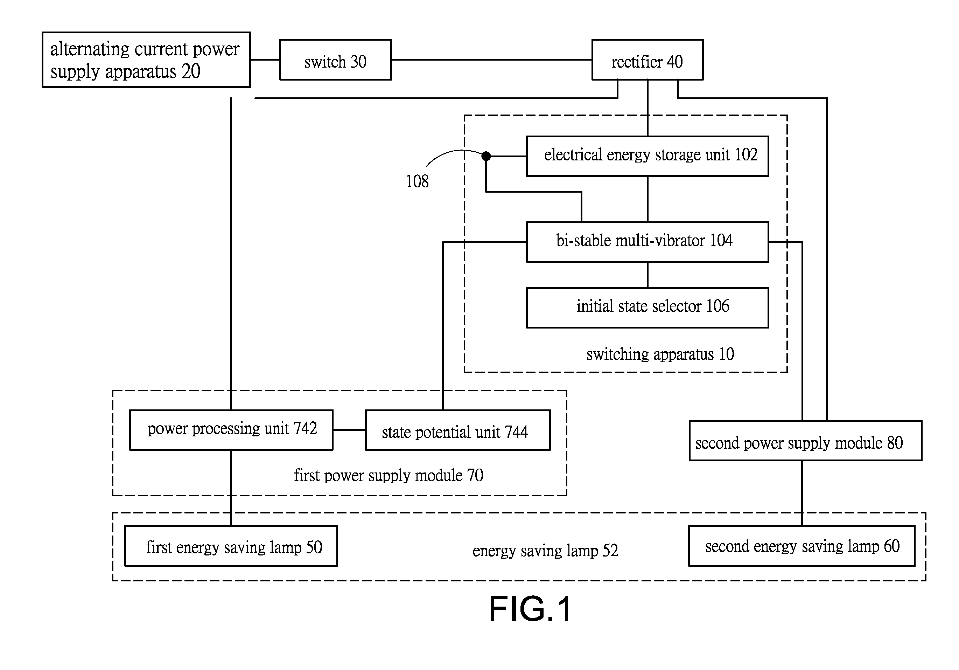

Fig. 1 shows a block diagram of the power supply module of the present invention.A first power supply module 70 (or a second power supply module 80) of the present invention is applied to a switching apparatus 10, an alternating current power supply apparatus 20, a switch 30, a rectifier 40 and an energy saving lamp 52. The energy saving lamp 52 comprises a first energy saving lamp 50 and a second energy saving lamp 60. The switch 30 is electrically connected to the alternating current power supply apparatus 20 and the rectifier 40. The first power supply module 70 is electrically connected to the first energy saving lamp 50, the rectifier 40 and the switching apparatus 10. The second power supply module 80 is electrically connected to the second energy saving lamp 60, the rectifier 40 and the switching apparatus 10. The switching apparatus 10 is electrically connected to the rectifier 40.

The power supply module 70 comprises a power processing unit 742 and a state potential unit 744. The power processing unit 742 is electrically connected to the rectifier 40 and the energy saving lamp 52. The state potential unit 744 is electrically connected to the switching apparatus 10 and the power processing unit 742.

The switching apparatus 10 comprises an electrical energy storage unit 102, a bi-stable multi-vibrator 104, an initial state selector 106 and a switching signal input side 108. The components comprise the switching apparatus 10 shown in Fig. 1 are for illustrating only. The present invention is not limited to it. Any switching apparatus which can switch between energy saving lamps, being achieved by hardware or software, can be applied to the present invention.

The electrical energy storage unit 102 is electrically connected to the rectifier 40. The bi-stable multi-vibrator 104 is electrically connected to the electrical energy storage unit 102, the first power supply module 70 and the second power supply module 80. The switching signal input side 108 is electrically connected to the electrical energy storage unit 102 and the bi-stable multi-vibrator 104. The initial state selector 106 is electrically connected to the bi-stable multi-vibrator 104.

In an embodiment, firstly the switch 30 is turned on, andthus the first energy saving lamp 50 is turned on and the second energy saving lamp 60 is turned off. Then, in a predetermined time (for example, 3 seconds),the switch 30 is turned off and then turned on again, and thusthe first energy saving lamp 50 is turned off and the second energy saving lamp 60 is turned on, and so on. Therefore, the purpose of switching between two energy saving lamps is achieved.

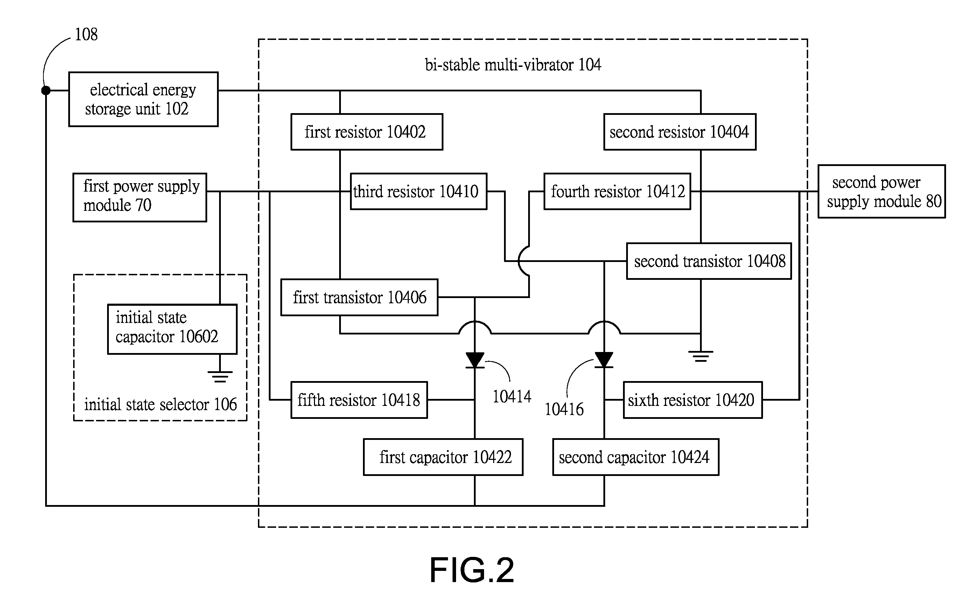

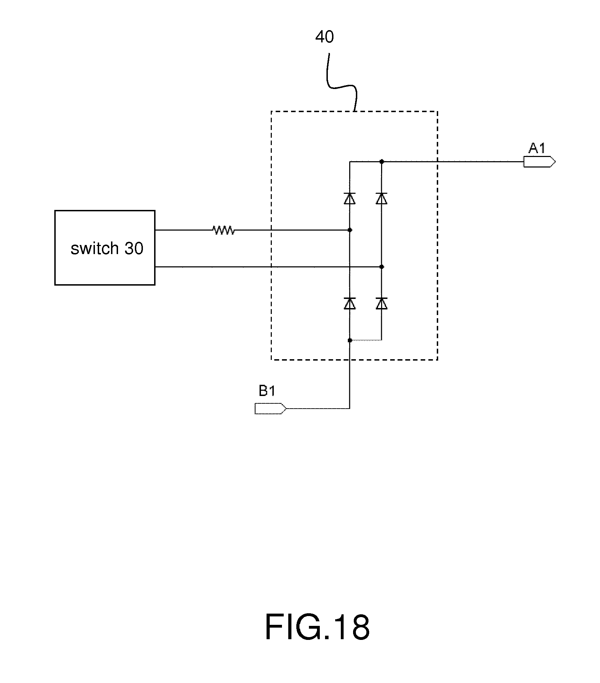

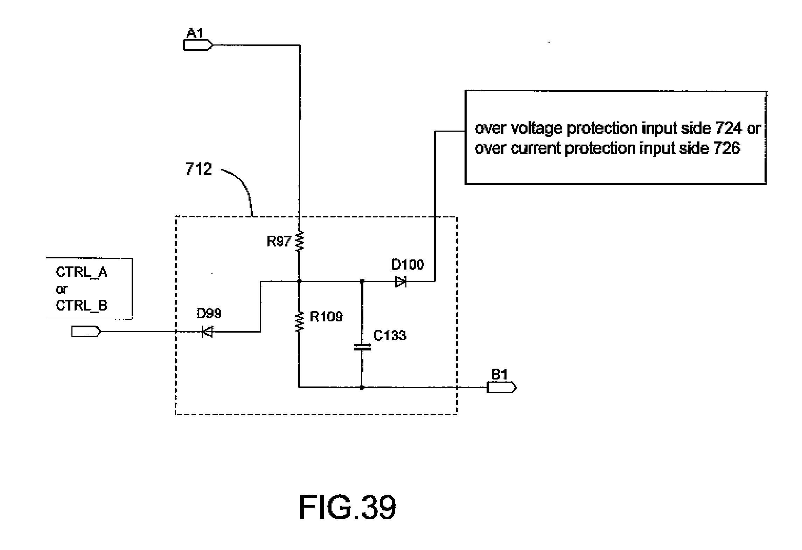

Fig. 2 shows a block diagram of the bi-stable multi-vibrator, the initial state selector and peripheral circuits.The initial state selector 106 comprises an initial state capacitor 10602. One side of the initial state capacitor 10602 is electrically connected to the bi-stable multi-vibrator 104. The other side of the initial state capacitor 10602 is electrically connected to ground (the ground in the circuit or a common connection B1 of the circuit shown in Figs. 18∼37 and Fig. 39).

The bi-stable multi-vibrator 104 comprises a first resistor 10402, a second resistor 10404, a first transistor 10406, a second transistor 10408, a third resistor 10410, a fourth resistor 10412, a first diode 10414, a second diode 10416, a fifth resistor 10418, a sixth resistor 10420, a first capacitor 10422 and a second capacitor 10424.

One side of the first resistor 10402 is electrically connected to the electrical energy storage unit 102. The other side of the first resistor 10402 is electrically connected to the first power supply module 70. One side of the second resistor 10404 is electrically connected to the electrical energy storage unit 102 and one side of the first resistor 10402. The other side of the second resistor 10404 is electrically connected to the second power supply module 80. A first side of the first transistor 10406 is electrically connected to the other side of the first resistor 10402 and the first power supply module 70. A third side of the first transistor 10406 is electrically connected to ground (the ground in the circuit or thecommon connection B1 of the circuit shown in Figs. 18∼37 and Fig. 39). A first side of the second transistor 10408 is electrically connected to the other side of the second resistor 10404 and the second power supply module 80. A third side of the second transistor 10408 is electrically connected to ground (the ground in the circuit or thecommon connection B1 of the circuit shown in Figs. 18∼37 and Fig. 39).

One side of the third resistor 10410 is electrically connected to the first side of the first transistor 10406, the other side of the first resistor 10402 and the first power supply module 70. The other side of the third resistor 10410 is electrically connected to a second side of the second transistor 10408. One side of the fourth resistor 10412 is electrically connected to a second side of the first transistor 10406. The other side of the fourth resistor 10412 is electrically connected to the first side of the second transistor 10408, the other side of the second resistor 10404 and the second power supply module 80. An anode of the first diode 10414 is electrically connected to the second side of the first transistor 10406 and one side of the fourth resistor 10412. An anode of the second diode 10416 is electrically connected to the second side of the second transistor 10408 and the other side of the third resistor 10410.

One side of the fifth resistor 10418 is electrically connected to the first side of the first transistor 10406, the other side of the first resistor 10402, one side of the third resistor 10410 and the first power supply module 70. The other side of the fifth resistor 10418 is electrically connected to a cathode of the first diode 10414. One side of the sixth resistor 10420 is electrically connected to a cathode of the second diode 10416. The other side of the sixth resistor 10420 is electrically connected to the first side of the second transistor 10408, the other side of the second resistor 10404, the other side of the fourth resistor 10412 and the second power supply module 80.

One side of the first capacitor 10422 is electrically connected to the cathode of the first diode 10414 and the other side of the fifth resistor 10418. The other side of the first capacitor 10422 is electrically connected to the switching signal input side 108. One side of the second capacitor 10424 is electrically connected to the cathode of the second diode 10416 and one side of the sixth resistor 10420. The other side of the second capacitor 10424 is electrically connected to the switching signal input side 108 and the other side of the first capacitor 10422.

When the initial state capacitor 10602 is connected to one side of the first power supply module 70 (as shown in Fig. 2, one side of the initial state capacitor 10602 is electrically connected to the first side of the first transistor 10406, and the other side of the initial state capacitor 10602 is electrically connected to the ground in the circuit or the common connection B1 of the circuit shown in Figs. 18∼37 and Fig. 39) or the second side of the second transistor 10408 (namely, one side of the initial state capacitor 10602 is electrically connected to the second side of the second transistor 10408, and the other side of the initial state capacitor 10602 is electrically connected to the ground in the circuit or the common connection B1 of the circuit shown in Figs. 18∼37 and Fig. 39): the first power supply module 70 receives a low potential (or zero potential) control signal and the second power supply module 80 receives a high potential control signal when the switch 30 is turned on for the first time.When the initial state capacitor 10602 is connected to one side of the second power supply module 80 (namely, one side of the initial state capacitor 10602 is electrically connected to the first side of the secondtransistor 10408, and the other side of the initial state capacitor 10602 is electrically connected to the ground in the circuit or the common connection B1 of the circuit shown in Figs. 18∼37 and Fig. 39) or the second side of the firsttransistor 10406 (namely, one side of the initial state capacitor 10602 is electrically connected to the second side of the firsttransistor 10406, and the other side of the initial state capacitor 10602 is electrically connected to the ground in the circuit or the common connection B1 of the circuit shown in Figs. 18∼37 and Fig. 39): the first power supply module 70 receives a high potentialcontrol signal and the second power supply module 80 receives a low potential (or zero potential) control signal when the switch 30 is turned on for the first time. Therefore, the function of selecting the initial state is achieved and the reliability of switching is increased.

In Fig. 2, the second power supply module 80 can be arranged at the same side with the first power supply module 70 as well (namely, the second power supply module 80 is not electrically connected to the second resistor 10404, the fourth resistor 10412, the second transistor 10408 and the sixth resistor 10420 but electrically connected to the first resistor 10402, the third resistor 10410, the first transistor 10406, the fifth resistor 10418 and the initial state selector 106). In such condition, the first energy saving lamp 50 is turned on if the first power supply module 70 receives a high potential control signal, and the second energy saving lamp 60 is turned on if the second power supply module 80 receives a low potential (or zero potential) control signal. Or, on the contrary, the first energy saving lamp 50 is turned on if the first power supply module 70 receives a low potential (or zero potential) control signal, and the second energy saving lamp 60 is turned on if the second power supply module 80 receives a high potential control signal.

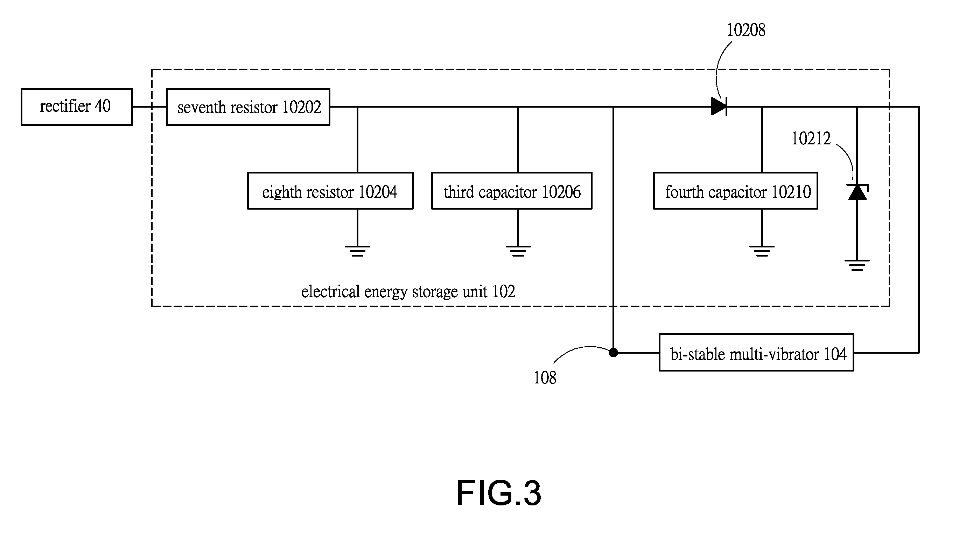

Fig. 3 shows a block diagram of the electrical energy storage unit.The electrical energy storage unit 102 comprises a seventh resistor 10202, an eighth resistor 10204, a third capacitor 10206, a third diode 10208, a fourth capacitor 10210 and a Zener diode 10212.

One side of the seventh resistor 10202 is electrically connected to the rectifier 40. The other side of the seventh resistor 10202 is electrically connected to the switching signal input side 108. One side of the eighth resistor 10204 is electrically connected to the other side of the seventh resistor 10202 and the switching signal input side 108. The other side of the eighth resistor 10204 is electrically connected to ground (the ground in the circuit or the common connection B1 of the circuit shown in Figs. 18∼37 and Fig. 39). One side of the third capacitor 10206 is electrically connected to the other side of the seventh resistor 10202, one side of the eighth resistor 10204 and the switching signal input side 108. The other side of the third capacitor 10206 is electrically connected to ground (the ground in the circuit or the common connection B1 of the circuit shown in Figs. 18∼37 and Fig. 39).

An anode of the third diode 10208 is electrically connected to the other side of the seventh resistor 10202, one side of the eighth resistor 10204, one side of the third capacitor 10206 and the switching signal input side 108. A cathode of the third diode 10208 is electrically connected to the bi-stable multi-vibrator 104. One side of the fourth capacitor 10210 is electrically connected to the cathode of the third diode 10208 and the bi-stable multi-vibrator 104. The other side of the fourth capacitor 10210 is electrically connected to ground (the ground in the circuit or the common connection B1 of the circuit shown in Figs. 18∼37 and Fig. 39). A cathode of the Zener diode 10212 is electrically connected to the cathode of the third diode 10208, the bi-stable multi-vibrator 104 and one side of the fourth capacitor 10210. An anode of the Zener diode 10212 is electrically connected to ground (the ground in the circuit or the common connection B1 of the circuit shown in Figs. 18∼37 and Fig. 39).

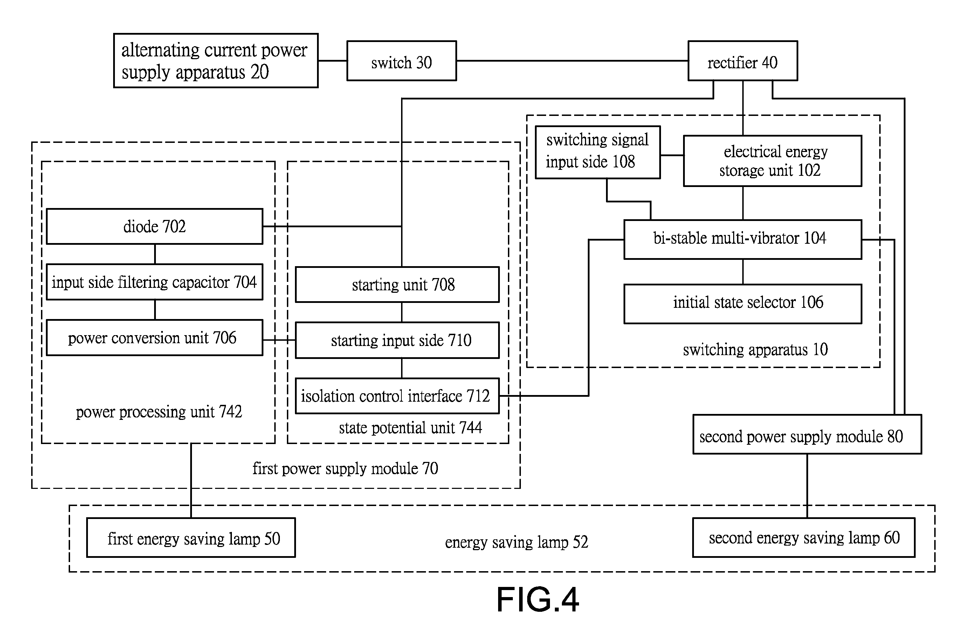

Fig. 4 shows a block diagram of the first embodiment of the power supply module of the present invention.The description for the elements shown in Fig. 4, which are similar to those shown in Fig. 1, is not repeated here for brevity. Moreover, the power processing unit 742 comprises a diode 702, an input side filtering capacitor 704 and a power conversion unit 706. The state potential unit 744 comprises a starting unit 708, a starting input side 710 and an isolationcontrol interface 712.

An anode of the diode 702 is electrically connected to the rectifier 40. The input side filtering capacitor 704 is electrically connected to a cathode of the diode 702. The power conversion unit 706 is electrically connected to the input side filtering capacitor 704 and the energy saving lamp 52 (the first energy saving lamp 50). The starting unit 708 is electrically connected to the rectifier 40 and the anode of the diode 702. The starting input side 710 is electrically connected to the starting unit 708 and the power conversion unit 706. The isolationcontrol interface 712 is electrically connected to the starting input side 710 and the bi-stable multi-vibrator 104.

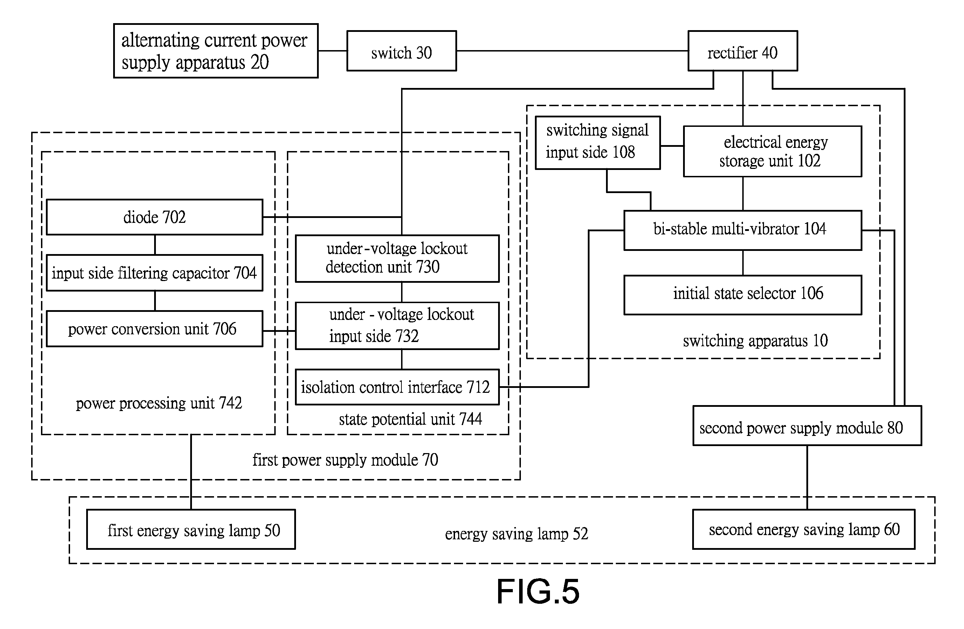

Fig. 5 shows a block diagram of the second embodiment of the power supply module of the present invention.The description for the elements shown in Fig. 5, which are similar to those shown in Fig. 1, is not repeated here for brevity. Moreover, the power processing unit 742 comprises a diode 702, an input side filtering capacitor 704 and a power conversion unit 706. The state potential unit 744 comprises anunder-voltage lockout detection unit 730, an under-voltage lockout input side 732 and an isolationcontrol interface 712.

An anode of the diode 702 is electrically connected to the rectifier 40. The input side filtering capacitor 704 is electrically connected to a cathode of the diode 702. The power conversion unit 706 is electrically connected to the input side filtering capacitor 704 and the energy saving lamp 52 (the first energy saving lamp 50). The under-voltage lockout detection unit 730 is electrically connected to the rectifier 40 and the anode of the diode 702. The under-voltage lockout input side 732 is electrically connected to the under-voltage lockout detection unit730 and the power conversion unit 706. The isolationcontrol interface 712 is electrically connected to the under-voltage lockout input side 732 and the bi-stable multi-vibrator 104.

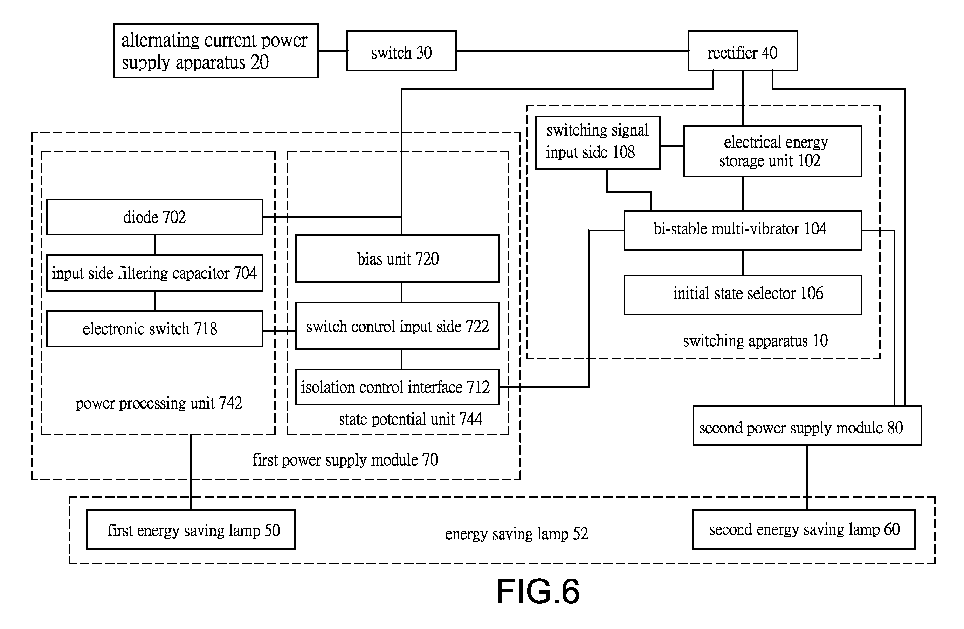

Fig. 6 shows a block diagram of the third embodiment of the power supply module of the present invention. The description for the elements shown in Fig. 6, which are similar to those shown in Fig. 1, is not repeated here for brevity. Moreover, the power processing unit 742 comprises a diode 702, an input side filtering capacitor 704 and an electronic switch 718. The state potential unit 744 comprises a bias unit 720, a switch control input side 722 and an isolationcontrol interface 712.

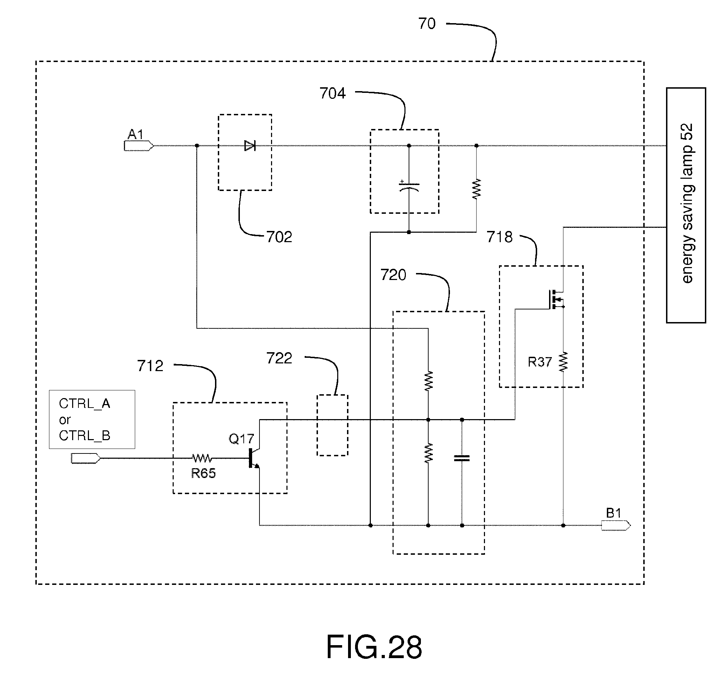

An anode of the diode 702 is electrically connected to the rectifier 40. The input side filtering capacitor 704 is electrically connected to a cathode of the diode 702 and the energy saving lamp 52 (the first energy saving lamp 50). The electronic switch 718 is electrically connected to the energy saving lamp 52 (the first energy saving lamp 50). The bias unit 720 is electrically connected to the rectifier 40 and the anode of the diode 702. The switch control input side 722 is electrically connected to the bias unit 720 and the electronic switch 718. The isolationcontrol interface712 is electrically connected to the switch control input side 722 and the bi-stable multi-vibrator 104. The electronic switch 718 comprises a current limiting resistor R37 as shown in Fig. 28.

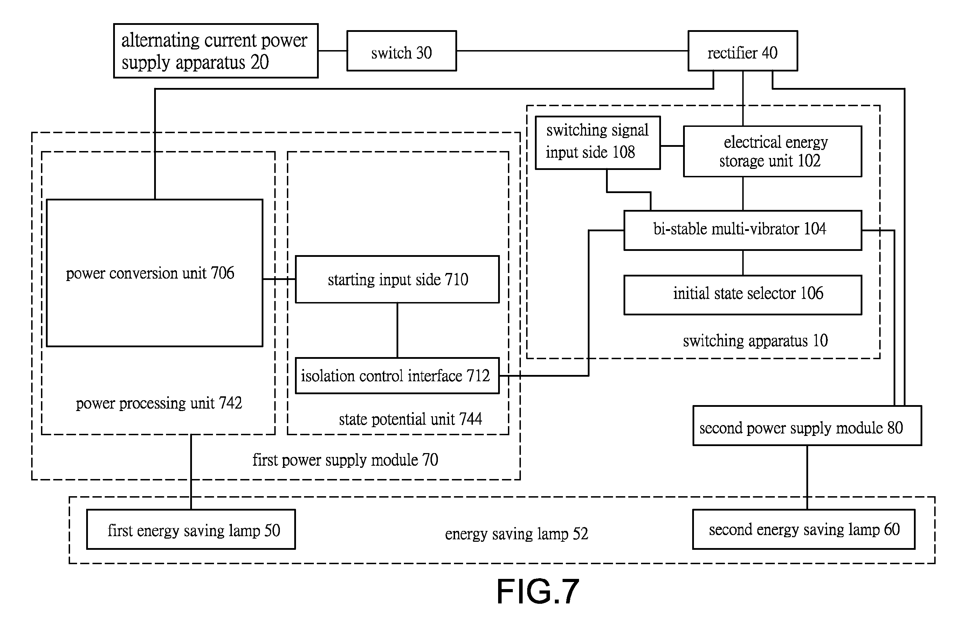

Fig. 7 shows a block diagram of the fourth embodiment of the power supply module of the present invention. The description for the elements shown in Fig. 7, which are similar to those shown in Fig. 1, is not repeated here for brevity. Moreover, the power processing unit 742 comprises a power conversion unit 706. The state potential unit 744 comprises a starting input side 710 and an isolationcontrol interface 712.

The power conversion unit706 is electrically connected to the rectifier 40 and the energy saving lamp 52 (the first energy saving lamp 50). The starting input side 710is electrically connected to the power conversion unit706. The isolationcontrol interface 712 is electrically connected to the starting input side 710 and the bi-stable multi-vibrator 104.

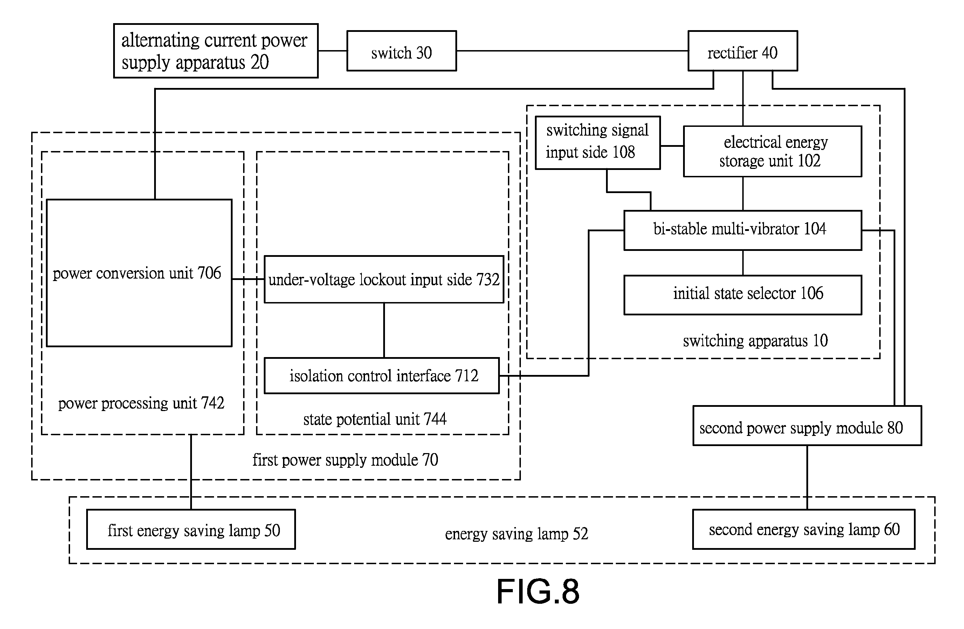

Fig. 8 shows a block diagram of the fifth embodiment of the power supply module of the present invention. The description for the elements shown in Fig. 8, which are similar to those shown in Fig. 1, is not repeated here for brevity. Moreover, the power processing unit 742 comprises a power conversion unit 706. The state potential unit 744 comprises an under-voltage lockout input side 732 and an isolationcontrol interface 712.

The power conversion unit 706 is electrically connected to the rectifier 40 and the energy saving lamp 52 (the first energy saving lamp 50). The under-voltage lockout input side 732 is electrically connected to the power conversion unit 706. The isolationcontrol interface 712 is electrically connected to the under-voltage lockout input side 732 and the bi-stable multi-vibrator 104.

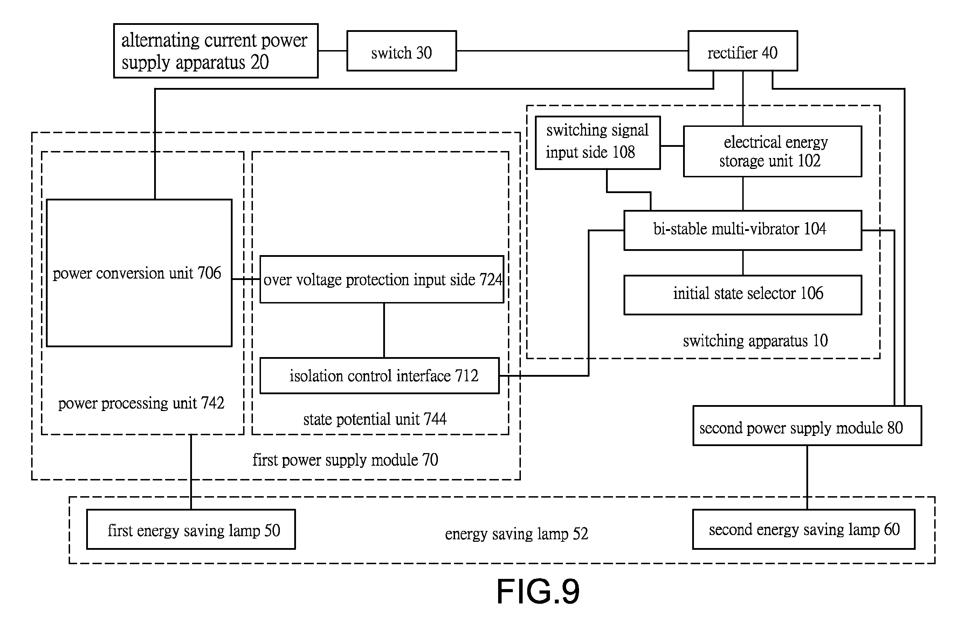

Fig. 9 shows a block diagram of the sixth embodiment of the power supply module of the present invention. The description for the elements shown in Fig. 9, which are similar to those shown in Fig. 1, is not repeated here for brevity. Moreover, the power processing unit 742 comprises a power conversion unit 706. The state potential unit 744 comprises an over voltage protection input side 724 and an isolationcontrol interface 712.

The power conversion unit 706 is electrically connected to the rectifier 40 and the energy saving lamp 52 (the first energy saving lamp 50). The over voltage protection input side 724 is electrically connected to the power conversion unit 706. The isolationcontrol interface 712 is electrically connected to the over voltage protection input side 724 and the bi-stable multi-vibrator 104.

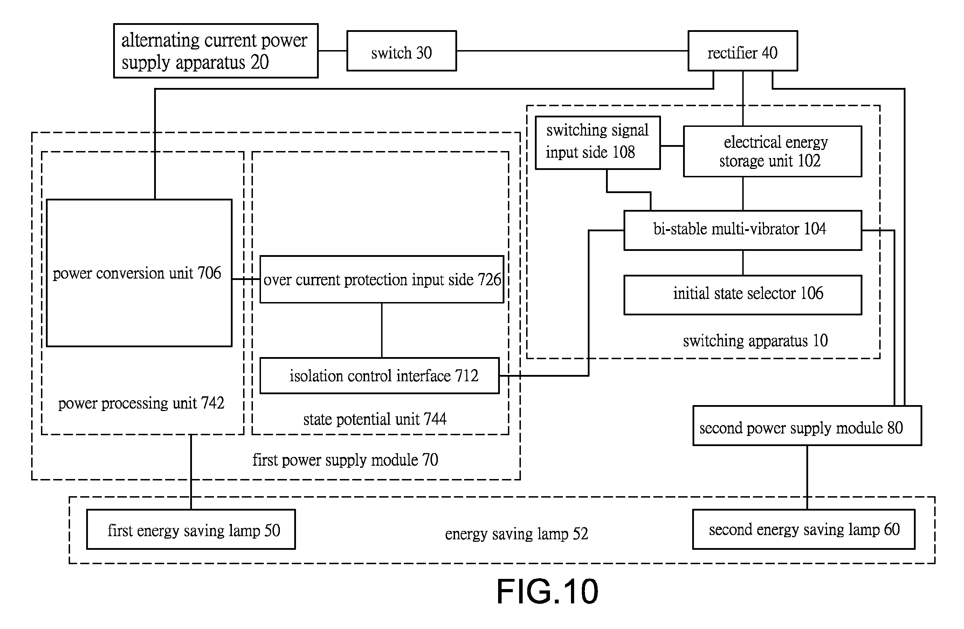

Fig. 10 shows a block diagram of the seventh embodiment of the power supply module of the present invention. The description for the elements shown in Fig. 10, which are similar to those shown in Fig. 1, is not repeated here for brevity. Moreover, the power processing unit 742 comprises a power conversion unit 706. The state potential unit 744 comprises an over currentprotection input side 726 and an isolationcontrol interface 712.

The power conversion unit 706 is electrically connected to the rectifier 40 and the energy saving lamp 52 (the first energy saving lamp 50). The over currentprotection input side 726 is electrically connected to the power conversion unit 706. The isolationcontrol interface 712 is electrically connected to the over currentprotection input side 726 and the bi-stable multi-vibrator 104.

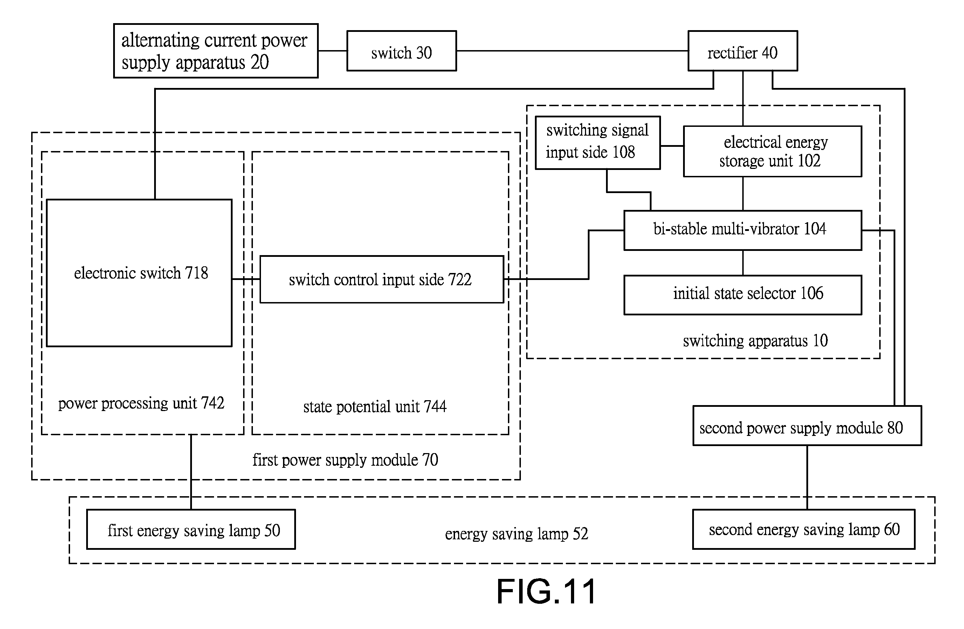

Fig. 11 shows a block diagram of the eighth embodiment of the power supply module of the present invention. The description for the elements shown in Fig. 11, which are similar to those shown in Fig. 1, is not repeated here for brevity. Moreover,the power processing unit 742 comprises an electronic switch 718. The state potential unit 744 comprises a switch control input side 722.

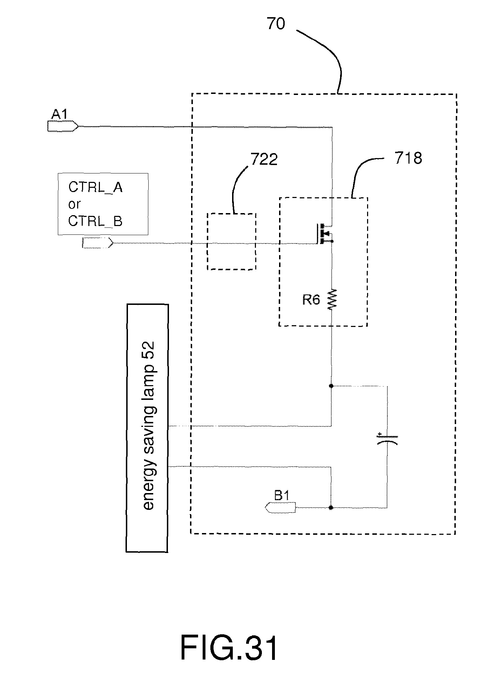

The electronic switch 718 is electrically connected to the rectifier 40 and the energy saving lamp 52 (the first energy saving lamp 50). The switch control input side 722 is electrically connected to the electronic switch718 and the bi-stable multi-vibrator 104. The electronic switch 718 comprises a current limiting resistor R6 as shown in Fig. 31.

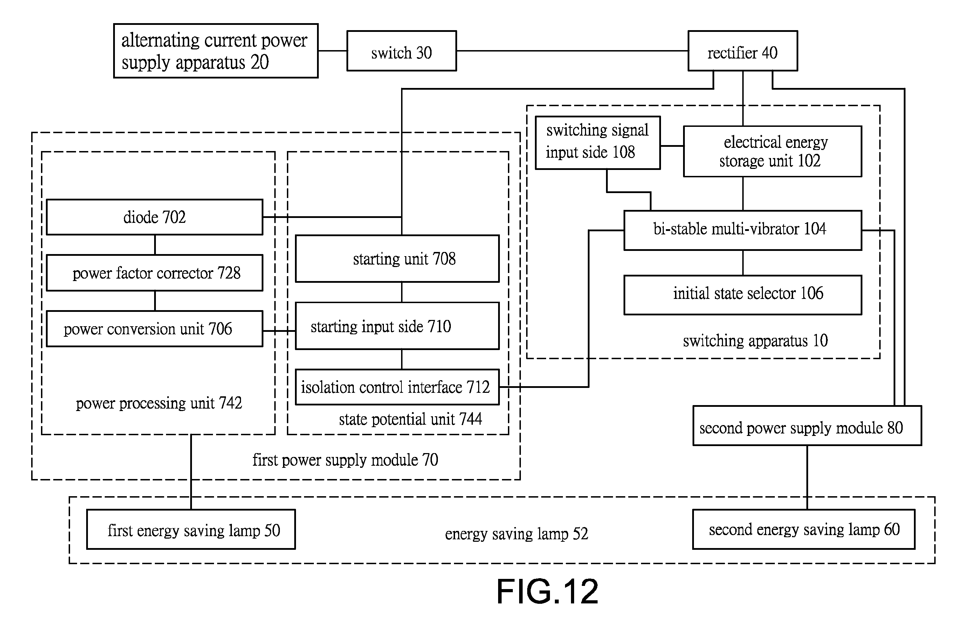

Fig. 12 shows a block diagram of the ninth embodiment of the power supply module of the present invention. The description for the elements shown in Fig. 12, which are similar to those shown in Fig. 1, is not repeated here for brevity. Moreover,the power processing unit 742 comprises a diode 702, a power factor corrector 728 and a power conversion unit 706. The state potential unit 744 comprises a starting unit 708, a starting input side 710 and an isolationcontrol interface 712.

An anode of the diode 702 is electrically connected to the rectifier 40. The power factor corrector 728 is electrically connected to a cathode of the diode 702. The power conversion unit706 is electrically connected to the power factor corrector 728 and the energy saving lamp 52 (the first energy saving lamp 50). The starting unit708 is electrically connected to the rectifier 40 and the anode of the diode 702. The starting input side 710 is electrically connected to the starting unit 708 and the power conversion unit706. The isolationcontrol interface 712 is electrically connected to the starting input side 710 and the bi-stable multi-vibrator 104.

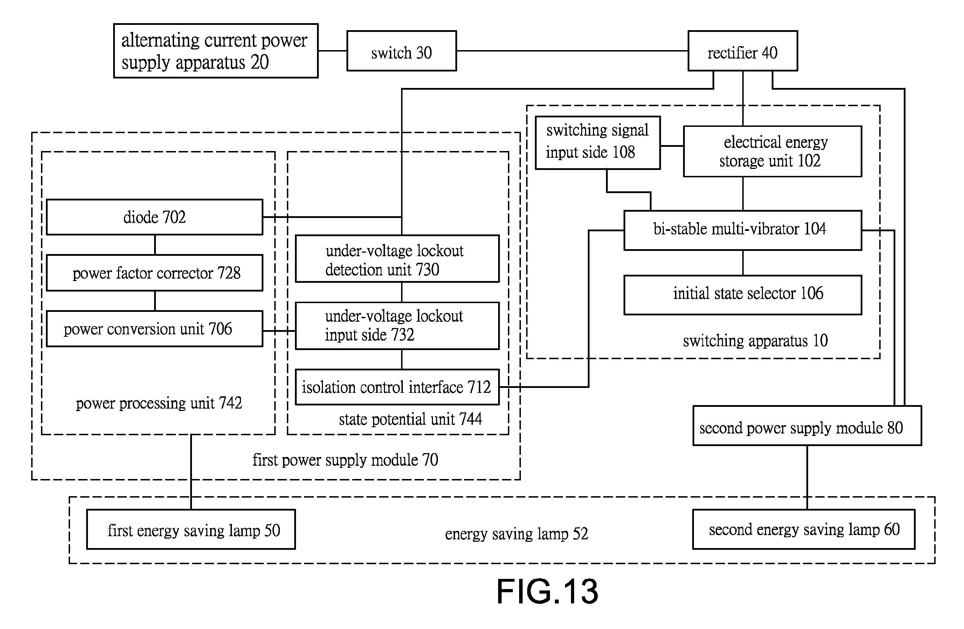

Fig. 13 shows a block diagram of the tenth embodiment of the power supply module of the present invention. The description for the elements shown in Fig. 13, which are similar to those shown in Fig. 1, is not repeated here for brevity. Moreover, the power processing unit 742 comprises a diode 702, a power factor corrector 728 and a power conversion unit 706. The state potential unit 744 comprises anunder-voltage lockout detection unit 730, an under-voltage lockout input side 732 and an isolationcontrol interface 712.

An anode of the diode 702 is electrically connected to the rectifier 40. The power factor corrector 728 is electrically connected to a cathode of the diode 702. The power conversion unit706 is electrically connected to the power factor corrector 728 and the energy saving lamp 52 (the first energy saving lamp 50). The under-voltage lockout detection unit 730 is electrically connected to the rectifier 40 and the anode of the diode 702. The under-voltage lockout input side 732 is electrically connected to the under-voltage lockout detection unit 730 and the power conversion unit706. The isolationcontrol interface 712 is electrically connected to the under-voltage lockout input side 732 and the bi-stable multi-vibrator 104.

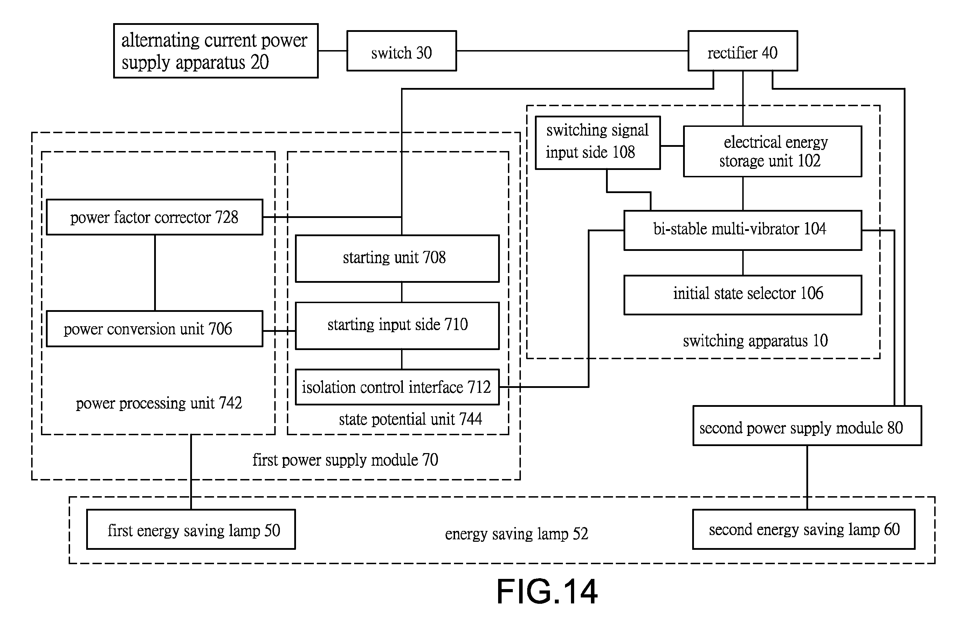

Fig. 14 shows a block diagram of the eleventh embodiment of the power supply module of the present invention. The description for the elements shown in Fig. 14, which are similar to those shown in Fig. 1, is not repeated here for brevity. Moreover, the power processing unit 742 comprises a power factor corrector 728 and a power conversion unit 706. The state potential unit 744 comprises a starting unit 708, a starting input side 710 and an isolationcontrol interface 712.

The power factor corrector 728 is electrically connected to the rectifier 40. The power conversion unit706 is electrically connected to the power factor corrector 728 and the energy saving lamp 52 (the first energy saving lamp 50). The starting unit708 is electrically connected to the rectifier 40 and the power factor corrector 728. The starting input side 710 is electrically connected to the starting unit 708 and the power conversion unit706. The isolationcontrol interface 712 is electrically connected to the starting input side 710 and the bi-stable multi-vibrator 104.

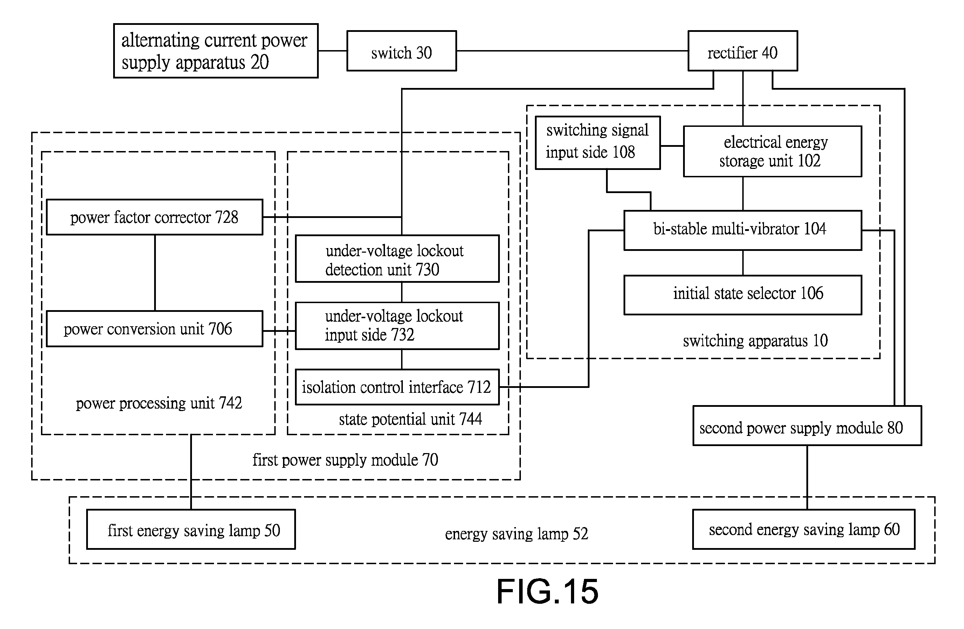

Fig. 15 shows a block diagram of the twelfth embodiment of the power supply module of the present invention. The description for the elements shown in Fig. 15, which are similar to those shown in Fig. 1, is not repeated here for brevity. Moreover, the power processing unit 742 comprises a power factor corrector 728 and a power conversion unit 706. The state potential unit 744 comprises anunder-voltage lockout detection unit 730, an under-voltage lockout input side 732 and an isolationcontrol interface 712.

The power factor corrector 728 is electrically connected to the rectifier 40. The power conversion unit 706 is electrically connected to the power factor corrector 728 and the energy saving lamp 52 (the first energy saving lamp 50). The under-voltage lockout detection unit 730 is electrically connected to the rectifier 40 and the power factor corrector 728. The under-voltage lockout input side 732 is electrically connected to the under-voltage lockout detection unit 730 and the power conversion unit 706. The isolationcontrol interface 712 is electrically connected to the under-voltage lockout input side 732 and the bi-stable multi-vibrator 104.

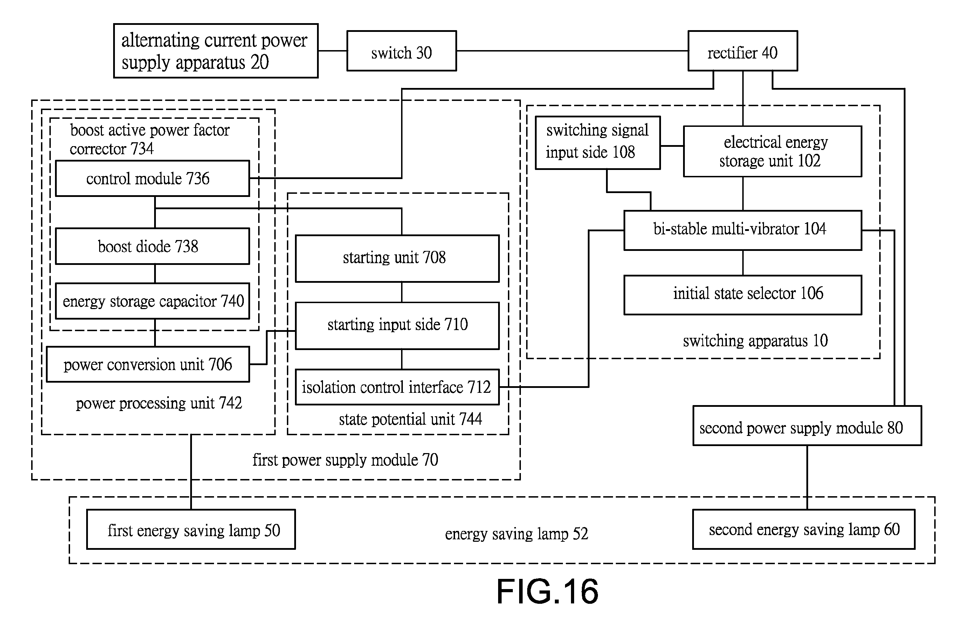

Fig. 16 shows a block diagram of the thirteenth embodiment of the power supply module of the present invention. The description for the elements shown in Fig. 16, which are similar to those shown in Fig. 1, is not repeated here for brevity. Moreover, the power processing unit 742 comprises a boost active power factor corrector 734 and a power conversion unit 706. The state potential unit 744 comprises a starting unit 708, a starting input side 710 and an isolationcontrol interface 712. The boost active power factor corrector 734 comprises a control module 736, a boost diode 738 and an energystorage capacitor 740.

The boost active power factor corrector 734 is electrically connected to the rectifier 40. The power conversion unit706 is electrically connected to the boost active power factor corrector 734 and the energy saving lamp 52 (the first energy saving lamp 50). The starting unit708 is electrically connected to the boost active power factor corrector 734. The starting input side 710 is electrically connected to the starting unit 708 and the power conversion unit 706.The isolationcontrol interface 712 is electrically connected to the starting input side 710 and the bi-stable multi-vibrator 104. The control module 736 is electrically connected to the rectifier 40 and the starting unit 708. An anode of the boost diode 738 is electrically connected to the control module 736 and the starting unit 708. The energystorage capacitor740 is electrically connected to a cathode of the boost diode 738 and the power conversion unit 706.

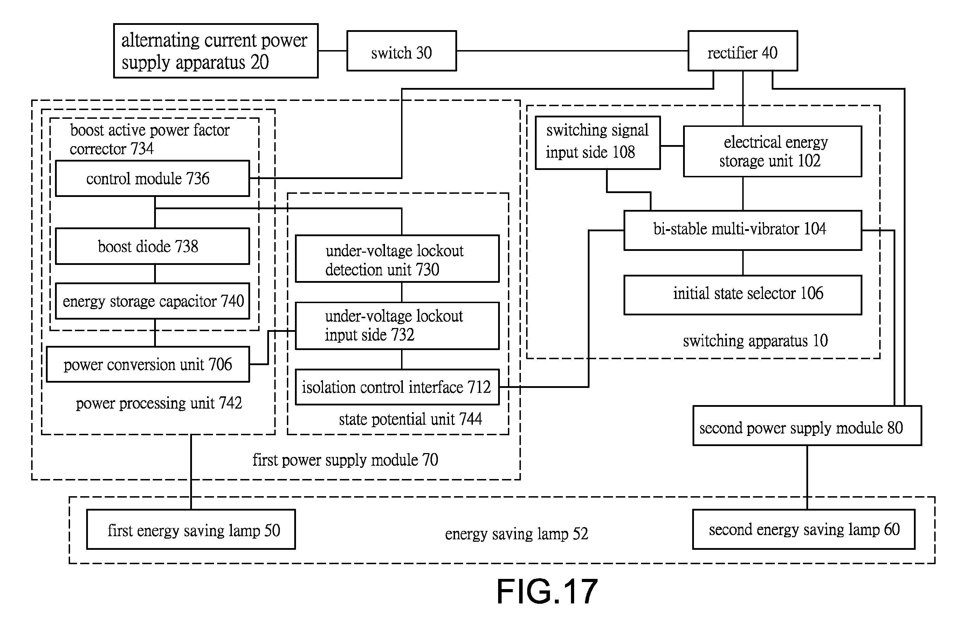

Fig. 17 shows a block diagram of the fourteenth embodiment of the power supply module of the present invention. The description for the elements shown in Fig. 17, which are similar to those shown in Fig. 1, is not repeated here for brevity. Moreover, the power processing unit 742 comprises a boost active power factor corrector 734 and a power conversion unit 706. The state potential unit 744 comprises an under-voltage lockout detection unit 730, an under-voltage lockout input side 732 and an isolationcontrol interface 712. The boost active power factor corrector 734 comprises a control module 736, a boost diode 738 and an energy storage capacitor 740.

The boost active power factor corrector 734 is electrically connected to the rectifier 40. The power conversion unit 706 is electrically connected to the boost active power factor corrector 734 and the energy saving lamp 52 (the first energy saving lamp 50). The under-voltage lockout detection unit 730 is electrically connected to the boost active power factor corrector 734. The under-voltage lockout input side 732 is electrically connected to the under-voltage lockout detection unit 730 and the power conversion unit 706. The isolationcontrol interface 712 is electrically connected to the under-voltage lockout input side 732 and the bi-stable multi-vibrator 104. The control module 736 is electrically connected to the rectifier 40 and the under-voltage lockout detection unit 730. An anode of the boost diode 738 is electrically connected to the control module 736 and the under-voltage lockout detection unit 730. The energy storage capacitor 740 is electrically connected to a cathode of the boost diode 738 and the power conversion unit 706.

The power processing unit 742 outputs a required power to the energy saving lamp 52. The state potential unit 744 is configured to provide the power processing unit 742 with a normal state potential required in a normal operation (state) of the power processing unit 742 (comprising in the beginning of the start-up andin the stable operation), or the state potential unit 744 is configured torespond to an abnormal state potential in an abnormal operation (state) of the power processing unit 742 (during the time span before the beginning of the start-up and until the operation).Take the power processing unit 742 in the start-up state as an example. A state potential provided or responded by the state potential unit 744 can be a start-uppotential (or start-up voltage) required for start-up. For the power processing unit 742 in the start-up state, the state potential provided or responded by the state potential unit 744 can be a detection potential (or a detection voltage, for examples but not limited to, an voltage lockout detection voltage, an over voltage protection detection voltage and an over currentprotection detection voltage).

The function of the under-voltage lockout(UVLO) mentioned above is that the power processing unit 742 has the protective lockout so that the power processing unit 742 stops outputting power when the input voltage of the power processing unit 742 is too low. The function of the over voltage protection is that the power processing unit 742 stops outputting power when the output voltage of the power processing unit 742 is too high. The function of the over currentprotection is that the power processing unit 742 stops outputting power when the output current of the power processing unit 742 is too high. In another word, the start-uppotential or the detection potential must be a predetermined normal potential when the power processing unit 742 is in the normal operation (state). In an embodiment of switching between energy saving lamps, the switching apparatus 10 provides the control signal. The switching apparatus 10 outputs an abnormal potential to the state potential unit 744 through the isolationcontrol interface 712, so that the power processing unit 742 stops outputting power. Or, the switching apparatus 10 provides the control signal. The switching apparatus 10 stops outputting the abnormal potential to the state potential unit 744 through the isolationcontrol interface 712, so that the power processing unit 742 can output power normally. Therefore, the purpose of switching between different energy saving lamps is achieved.

The first power supply module 70 (or the second power supply module 80) shown in Figs. 4∼17 have various circuit structures. The first power supply module 70 and the second power supply module 80 can be any matches. For example, the circuit structure of the first power supply module 70 is shown in Fig. 4 while the circuit structure of the second power supply module 80 is shown in Fig. 5. Or, the circuit structure of the first power supply module 70 is shown in Fig. 7 while the circuit structure of the second power supply module 80 is shown in Fig. 6.Or, the circuit structure of the first power supply module 70 is shown in Fig. 8 while the circuit structure of the second power supply module 80 is shown in Fig. 8. The isolationcontrol interface 712 shown in Figs. 4∼8 and 12∼17 can be transistor type or diode type. The isolationcontrol interface 712 shown in Figs. 9∼10 can comprise an auxiliary power circuitand aunidirectional circuit. The isolationcontrol interface 712 can be transistor type or diode type.

Please refer to Figs. 18∼39. The B1 shown in Figs. 18∼39 is thecommon connection of the circuit or the ground of the circuit. A1, CTRL_A and CTRL_B indicate circuit connection lines named A1, CTRL_A and CTRL_B respectively. The circuit diagrams having the same circuit connection lines (A1, CTRL_A or CTRL_B) connect to each other through the same circuit connection lines (A1, CTRL_A or CTRL_B).

Fig. 18 shows a circuit diagram of the rectifier.

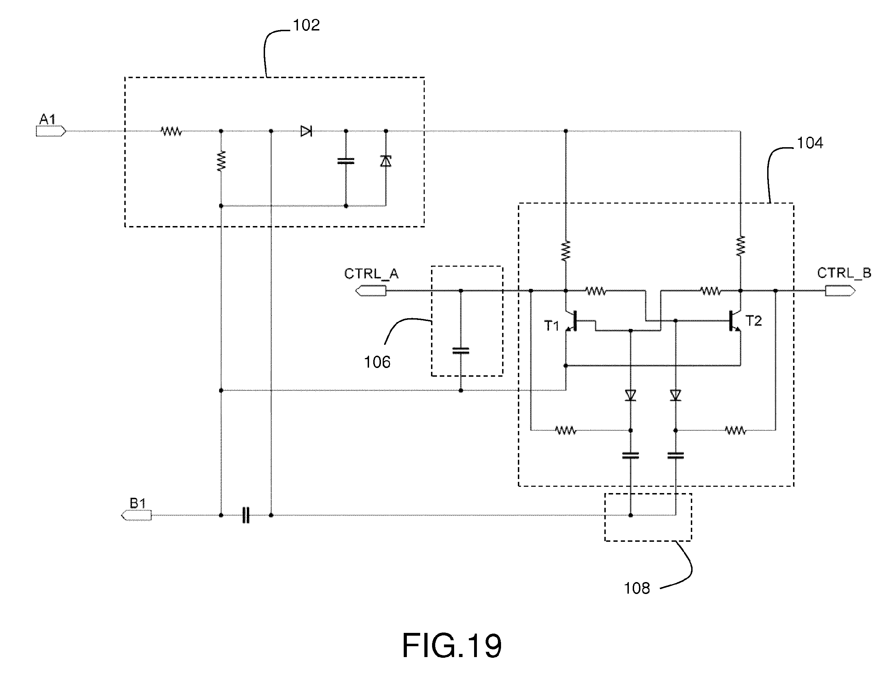

Fig. 19 shows a circuit diagram of the first embodiment of the connection of the initial state selector.

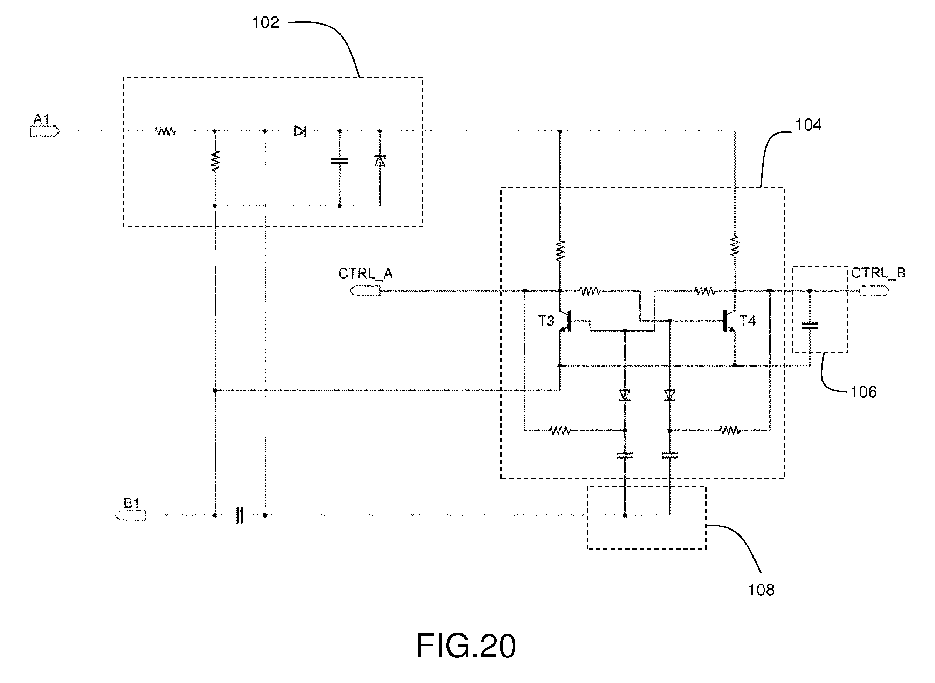

Fig. 20 shows a circuit diagram of the second embodiment of the connection of the initial state selector.

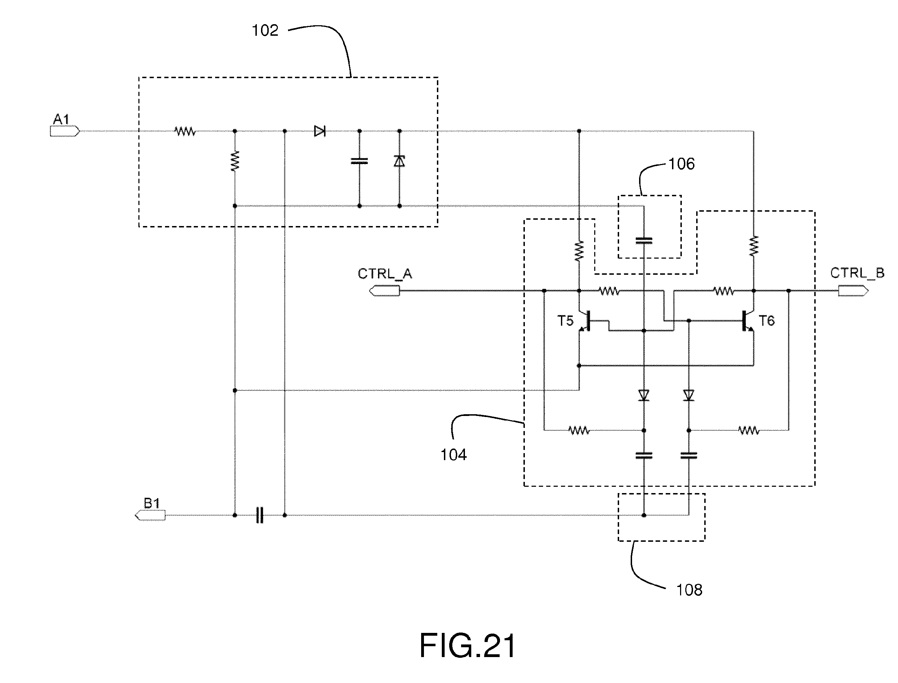

Fig. 21 shows a circuit diagram of the third embodiment of the connection of the initial state selector.

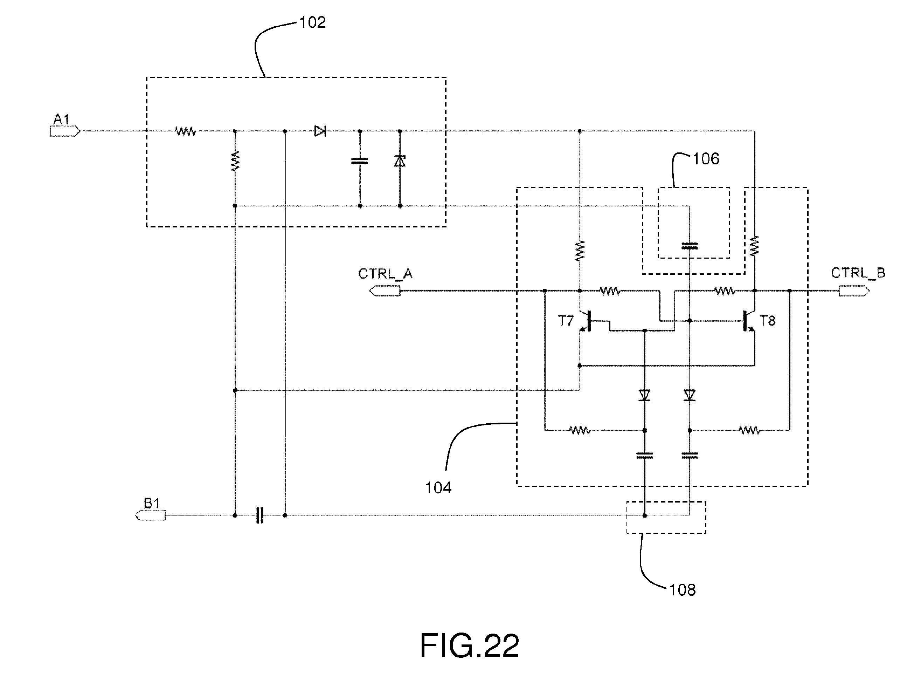

Fig. 22 shows a circuit diagram of the fourth embodiment of the connection of the initial state selector.

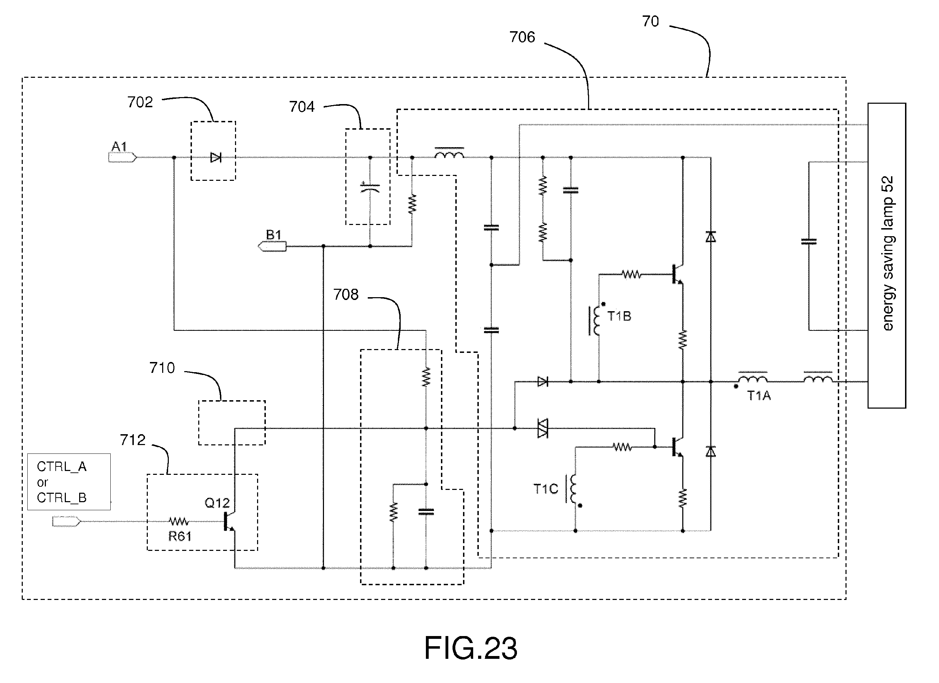

Fig. 23 shows a circuit diagram of the first embodiment of Fig. 4. Moreover, the energy saving lamp 52 is a fluorescent lamp. The power conversion unit 706 is composed ofdiscrete components. The winding T1A, T1B and T1C are arranged in the same transformer.

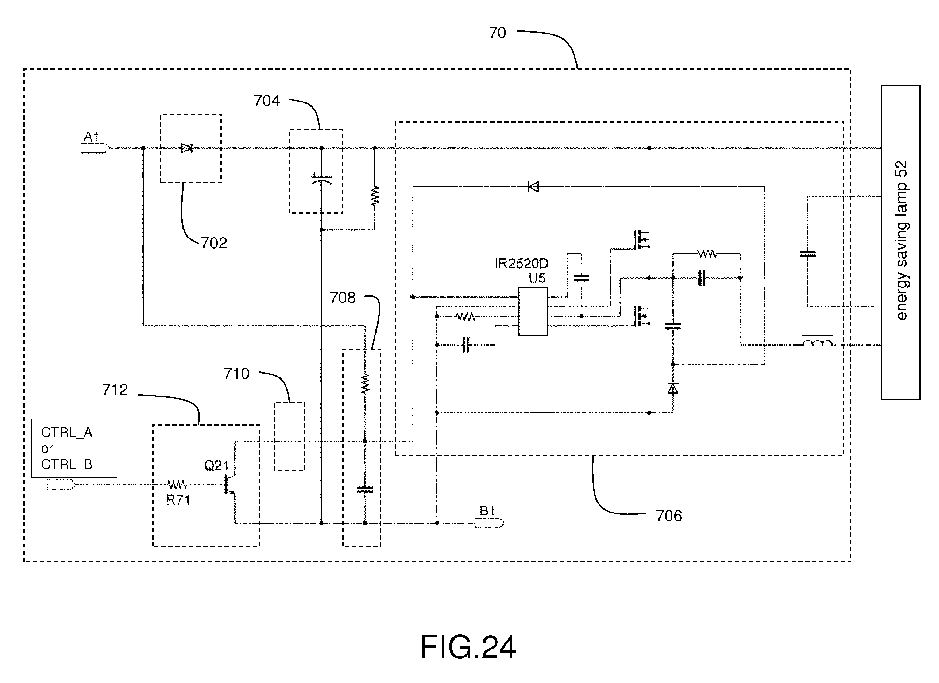

Fig. 24 shows a circuit diagram of the second embodiment of Fig. 4. Moreover, the energy saving lamp 52 is a fluorescent lamp. The power conversion unit 706 comprises acontrolintegrated circuit U5 which is an IR2520D control integrated circuitmade by IRCorporation (International RectifierCorporation).

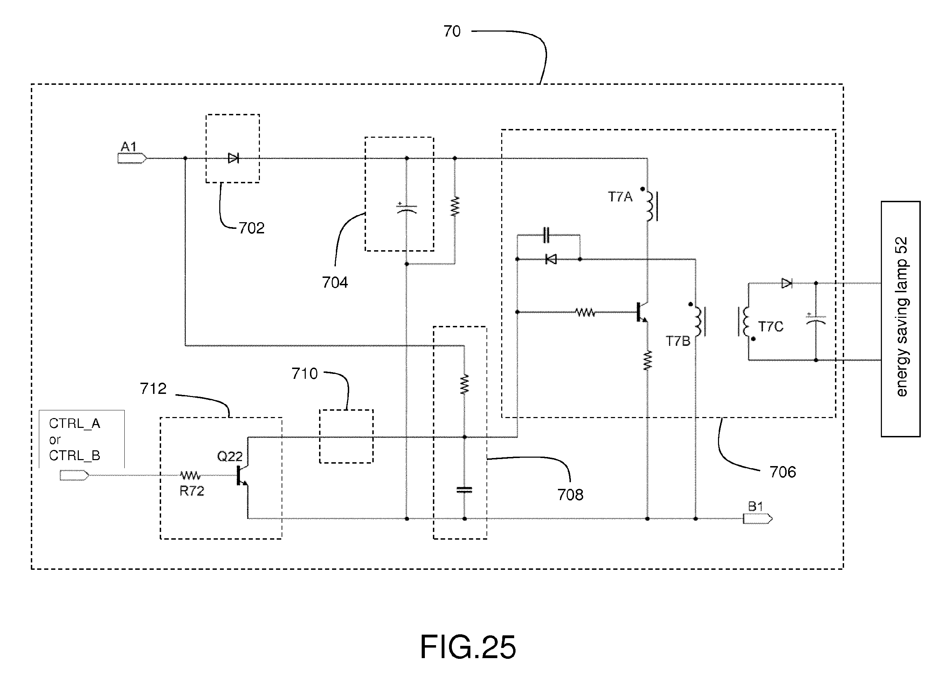

Fig. 25 shows a circuit diagram of the third embodiment of Fig. 4. Moreover, the energy saving lamp 52 is an LED lamp. The power conversion unit 706 is composed ofdiscrete components. The winding T7A, T7B and T7C are arranged in the same transformer.

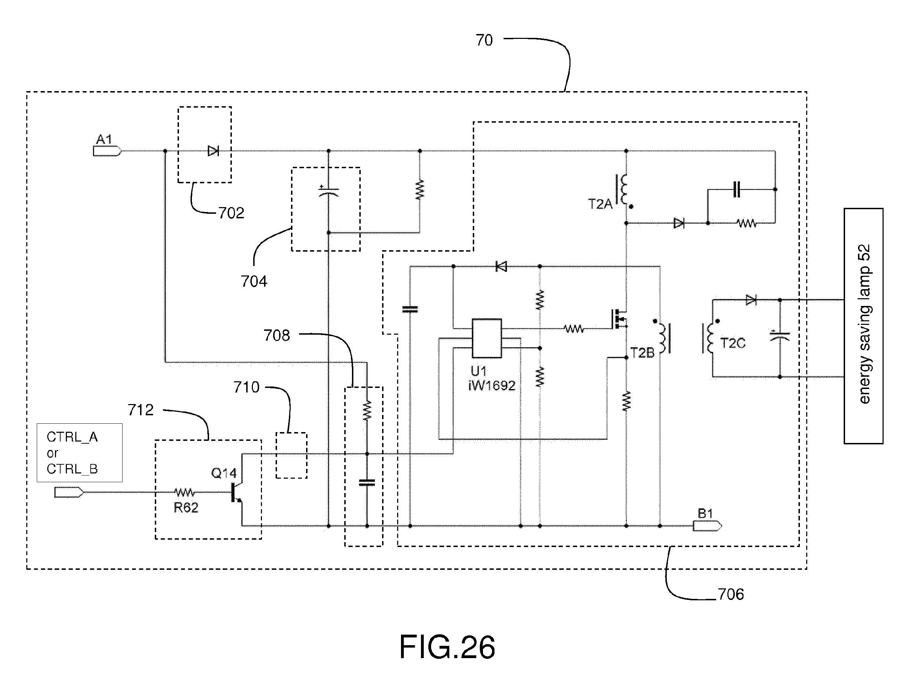

Fig. 26 shows a circuit diagram of the fourth embodiment of Fig. 4. Moreover, the energy saving lamp 52 is an LED lamp. The power conversion unit 706 comprises a control integrated circuit U1 which is an iW1692control integrated circuitmade by iWattCorporation. The winding T2A, T2B and T2C are arranged in the same transformer.

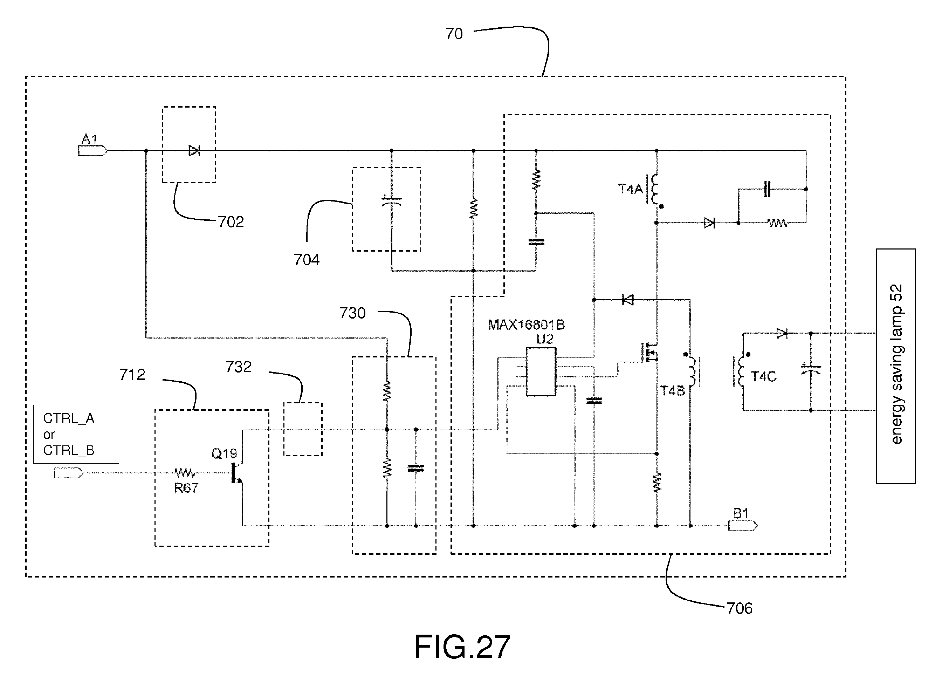

Fig. 27 shows a circuit diagram of an embodiment of Fig. 5. Moreover, the energy saving lamp 52 is an LED lamp. The power conversion unit 706 comprises a control integrated circuit U2 which is a MAX16801Bcontrol integrated circuitmade by MaximCorporation. The winding T4A, T4B and T4C are arranged in the same transformer.

Fig. 28 shows a circuit diagram of an embodiment of Fig. 6. Moreover, the energy saving lamp 52 is an LED lamp.

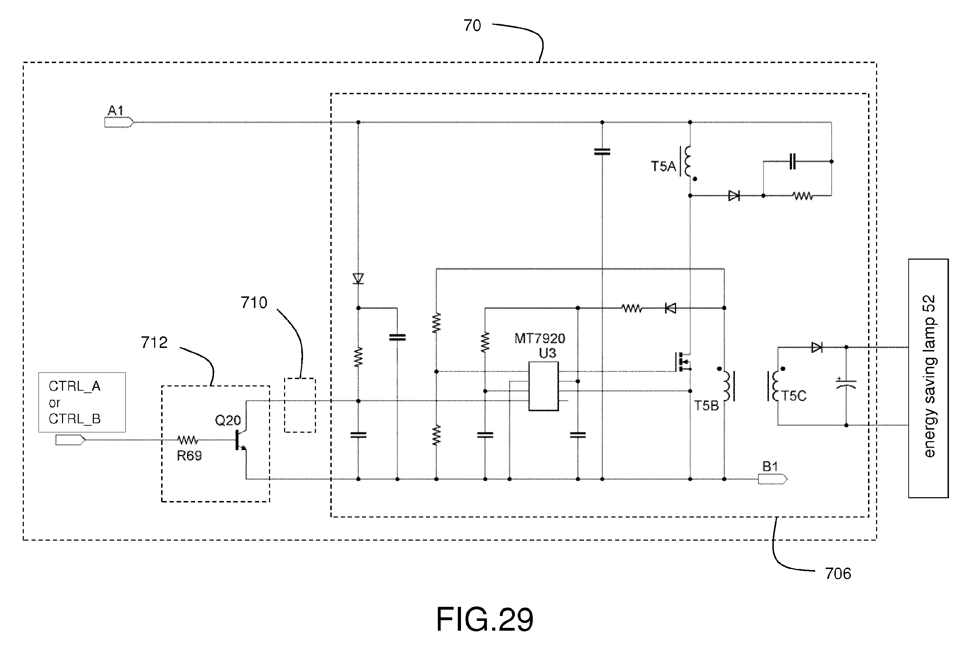

Fig. 29 shows a circuit diagram of an embodiment of Fig. 7. Moreover, the energy saving lamp 52 is an LED lamp. The power conversion unit 706 comprises a control integrated circuit U3 which is a MT7920control integrated circuitmade by MaxictechCorporation. The winding T5A, T5B and T5C are arranged in the same transformer.

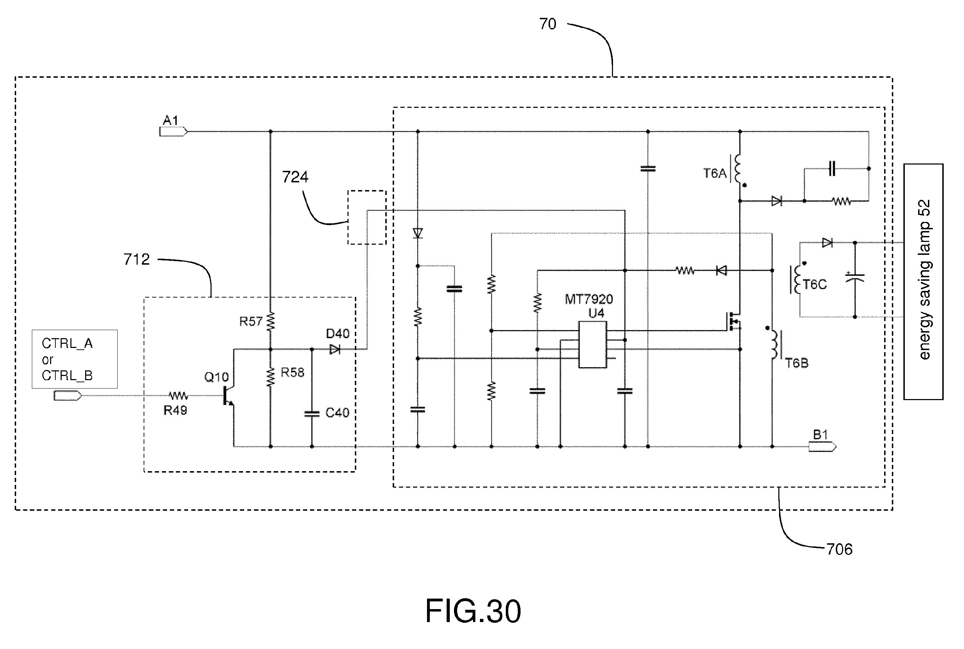

Fig. 30 shows a circuit diagram of an embodiment of Fig. 9. Moreover, the energy saving lamp 52 is an LED lamp. The power conversion unit 706 comprises a control integrated circuit U4 which is a MT7920control integrated circuitmade by MaxictechCorporation. The winding T6A, T6B and T6C are arranged in the same transformer.

Fig. 31 shows a circuit diagram of an embodiment of Fig. 11. Moreover, the energy saving lamp 52 is an LED lamp.

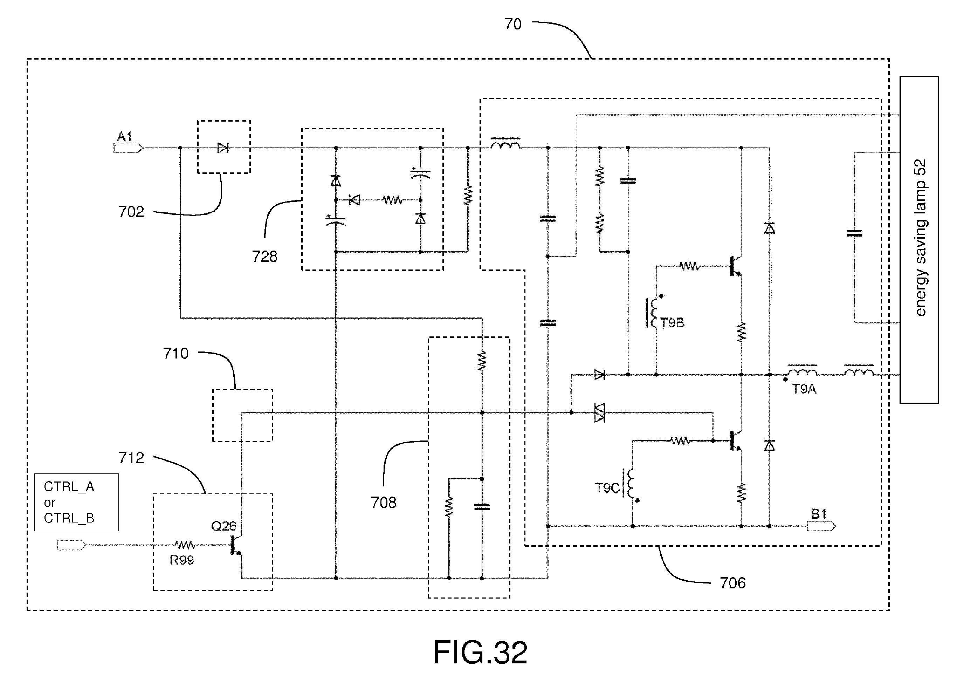

Fig. 32 shows a circuit diagram of the first embodiment of Fig. 12. Moreover, the energy saving lamp 52 is a fluorescent lamp. The power conversion unit 706 is composed ofdiscrete components. The power factor corrector 728 is a passive power factor corrector. The winding T9A, T9B and T9C are arranged in the same transformer.

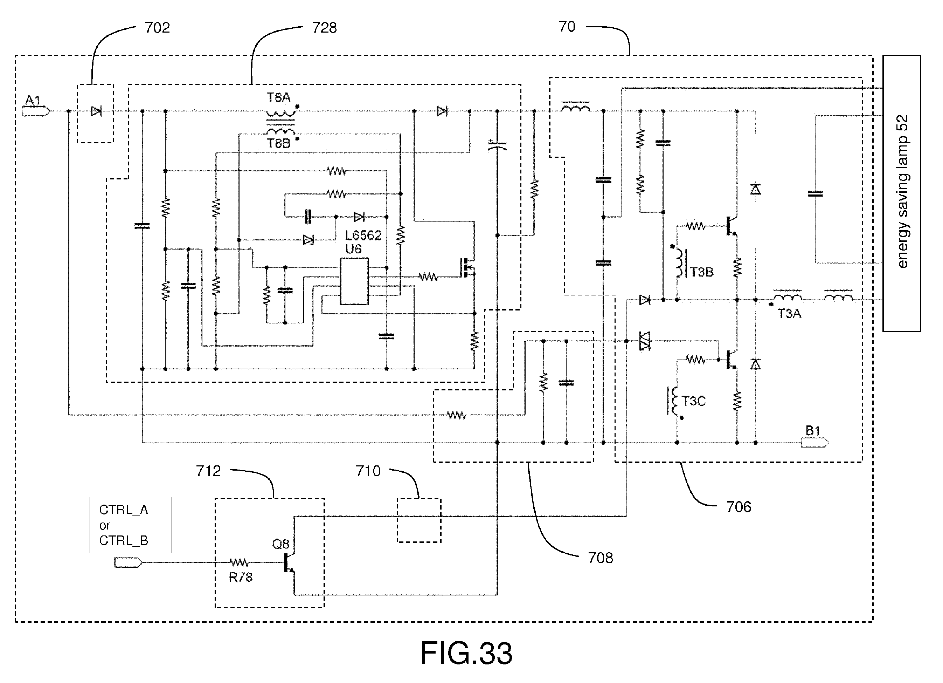

Fig. 33 shows a circuit diagram of the second embodiment of Fig. 12. Moreover, the energy saving lamp 52 is a fluorescent lamp. The power conversion unit 706 is composed ofdiscrete components. The power factor corrector 728 is an active power factor corrector. The power factor corrector 728 comprises a control integrated circuit U6 which is an L6562control integrated circuitmade by STMicroelectronicsCorporation. The winding T3A, T3B and T3C are arranged in the same transformer. The winding T8A and T8B are arranged in another transformer.

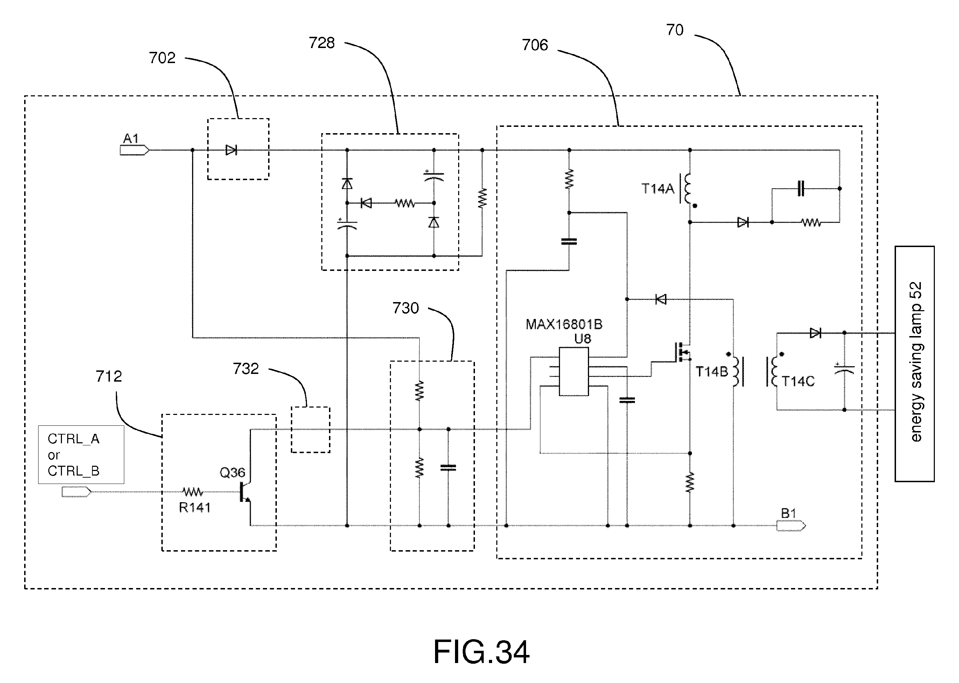

Fig. 34 shows a circuit diagram of an embodiment of Fig. 13. Moreover, the energy saving lamp 52 is an LED lamp. The power conversion unit 706 comprises a control integrated circuit U8 which is a MAX16801Bcontrol integrated circuit made by MaximCorporation. The power factor corrector 728 is a passive power factor corrector. The winding T14A, T14B and T14C are arranged in the same transformer.

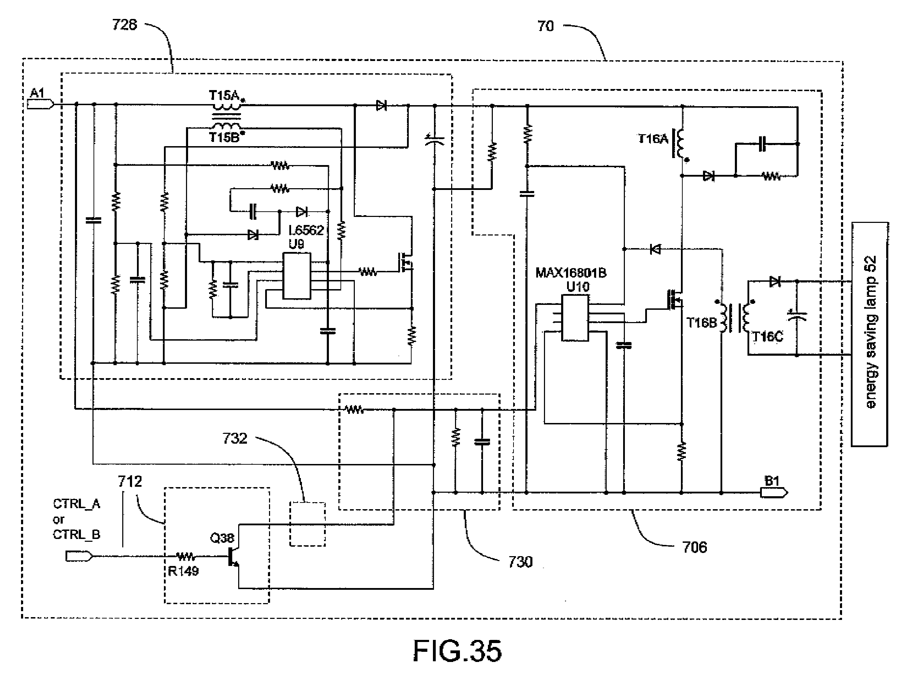

Fig. 35 shows a circuit diagram of an embodiment of Fig. 15. Moreover, the energy saving lamp 52 is an LED lamp. The power conversion unit 706 comprises a control integrated circuit U10 which is a MAX16801Bcontrol integrated circuit made by MaximCorporation. The power factor corrector 728 is an active power factor corrector. The power factor corrector 728 comprises a control integrated circuit U9 which is an L6562control integrated circuit made by STMicroelectronicsCorporation. The winding T16A, T16B and T16C are arranged in the same transformer. The winding T15A and T15B are arranged in another transformer.

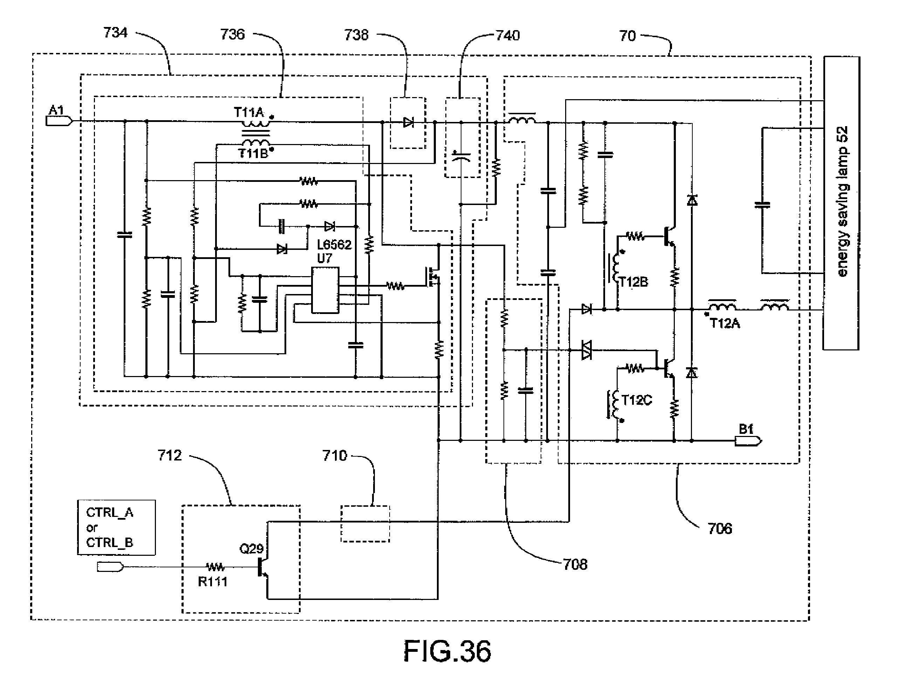

Fig. 36 shows a circuit diagram of an embodiment of Fig. 16. Moreover, the energy saving lamp 52 is a fluorescent lamp. The power conversion unit 706 is composed ofdiscrete components. The control module 736 comprises a control integrated circuit U7 which is an L6562control integrated circuit made by STMicroelectronicsCorporation. The winding T12A, T12B and T12C are arranged in the same transformer. The winding T11A and T 11 B are arranged in another transformer.

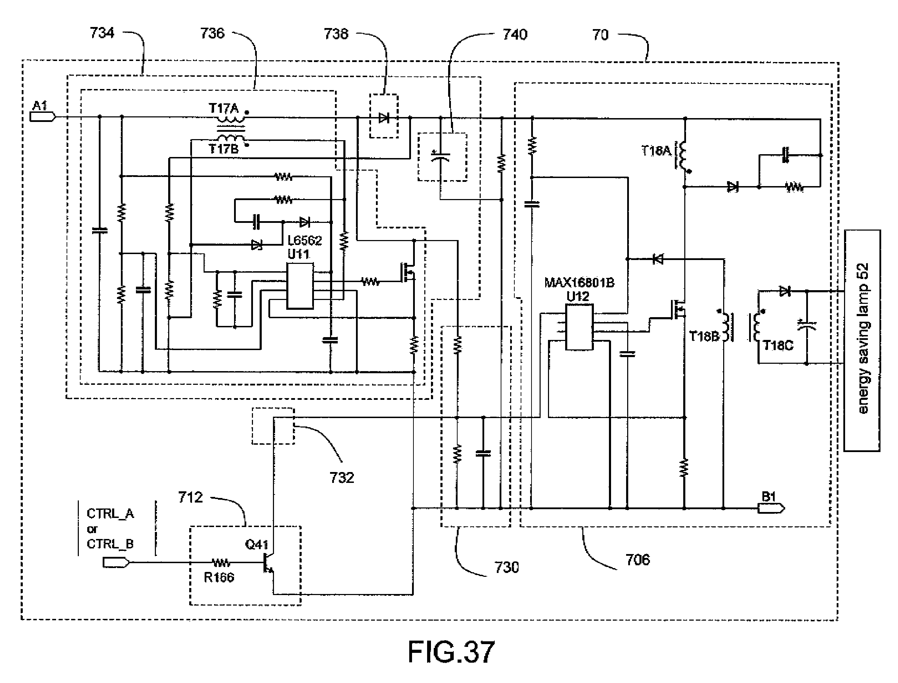

Fig. 37 shows a circuit diagram of an embodiment of Fig. 17. Moreover, the energy saving lamp 52 is an LED lamp. The power conversion unit 706 comprises a control integrated circuit U12 which is a MAX16801B control integrated circuit made by Maxim Corporation. The control module 736 comprises a control integrated circuit U11 which is an L6562 control integrated circuit made by STMicroelectronics Corporation.The winding T18A, T18B and T18C are arranged in the same transformer. The winding T17A and T 17B are arranged in another transformer.

The bipolar junction transistors T1∼T8 shown in Figs. 19∼22 can be replaced by field effect transistors to achieve the same function.

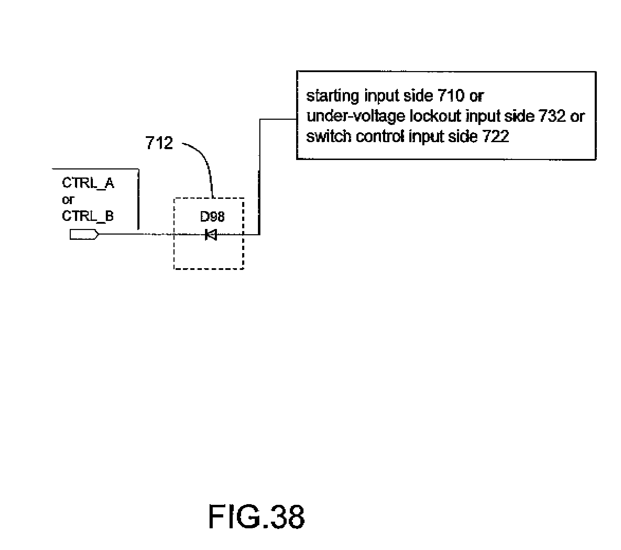

The isolationcontrol interface 712 shown in Figs. 4∼8 and 12∼17 can be transistor type or diode type. The isolationcontrol interface 712 shown in Figs. 23∼29 and 32∼37 is a transistor type isolationcontrol interface comprising a bipolar junction transistor (Q 12, Q21, Q22, Q14, Q19, Q17, Q20, Q26, Q8, Q36, Q38, Q29 and Q41) and a base resistor (R61, R71, R72, R62, R67, R65, R69, R99, R78, R141, R149, R111 and R166). The bipolar junction transistor mentioned above can be replaced by a diode, so that the base resistormentioned above can be removed and replaced by a line.Fig. 38 shows a circuit diagram of an embodiment of the diode type isolationcontrol interface of Figs. 4∼8 and 12∼17.A cathode of the diode D98 is electrically connected to the CTRL_A or CTRL_B of the bi-stable multi-vibrator 104. An anode of the diode D98 is electrically connected to the starting input side 710 or the under-voltage lockout input side 732 or the switch control input side 722. The bipolar junction transistor mentioned above (in Figs. 23∼29 and 32-37) can be replaced by a field effect transistor, so that the base resistor mentioned above can be removed and replaced by a line.

The isolationcontrol interface 712 shown in Figs. 9∼10 can comprise the auxiliary power circuitand the unidirectional circuit. The isolationcontrol interface 712 can be transistor type or diode type. The isolationcontrol interface 712 shown in Fig. 30 is a transistor type isolationcontrol interface comprising a bipolar junction transistor Q10 and a base resistor R49. The bipolar junction transistor Q10 can be replaced by a diode, so that the base resistor R49 can be removed and replaced by a line. Fig. 39 shows a circuit diagram of an embodiment of the diode type isolationcontrol interface of Figs. 9∼10.A cathode of the diode D99 is electrically connected to the CTRL_A or CTRL_B of the bi-stable multi-vibrator 104. An anode of the diode D99 is electrically connected to an anode of the diode D100. The bipolar junction transistor Q10 in Fig. 30 can be replaced by a field effect transistor, so that the base resistor R49 can be removed and replaced by a line. The isolationcontrol interface 712 shown in Figs. 9∼10 can comprise the auxiliary power circuit and the unidirectional circuit. Please refer to Fig. 39. The auxiliary power circuit mentioned above comprises a resistor R97, a resistor R109 and a capacitor C133. The unidirectional circuitmentioned above comprises a diode D100.

The circuit diagrams mentioned above are the embodiments of the present invention. The power conversion unit 706 can be composed ofdiscrete components only, or can comprise a control integrated circuit. The power factor corrector 728 can be an active power factor corrector or a passive power factor corrector.

The power supply module of the present invention can be applied to the switching apparatus which has low cost and low power consumptionand high reliability.

Although the present invention has been described with reference to the preferred embodiment thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A power supply module 70 applied to a rectifier 40, a switching apparatus 10 and an energy saving lamp52, the power supply module 70 comprising:
a power processing unit 742 electrically connected to the rectifier 40 and the energy saving lamp 52, the power processing unit742 outputting a required power to the energy saving lamp 52; and
a state potential unit 744 electrically connected to the switching apparatus 10 and the power processing unit742, the state potential unit 744 configured to provide the power processing unit742 with a normal state potential required in a normal operation of the power processing unit742, or the state potential unit 744 configured to respond to an abnormal state potential in an abnormal operation of the power processing unit742.

2. The power supply module 70 in claim 1, wherein the state potential unit744 comprises an isolationcontrol interface712 electrically connected to the switching apparatus 10.

3. The power supply module 70 in claim 2, wherein thepower processing unit 742 comprises:
a diode 702, an anode of the diode 702 electrically connected to the rectifier 40;
an input side filtering capacitor 704 electrically connected to a cathode of the diode 702; and
a power conversion unit 706 electrically connected to the input side filtering capacitor 704 and the energy saving lamp 52,
wherein the state potential unit 744 further comprises:
a starting unit 708 electrically connected to the rectifier 40 and the anode of the diode 702; and
a starting input side 710 electrically connected to the starting unit 708, the power conversion unit 706 and the isolationcontrol interface 712.

4. The power supply module 70 in claim 2, wherein the power processing unit 742 comprises:
a diode 702, an anode of the diode 702 electrically connected to the rectifier 40;
an input side filtering capacitor 704 electrically connected to a cathode of the diode 702; and
a power conversion unit 706 electrically connected to the input side filtering capacitor 704 and the energy saving lamp 52,
wherein the state potential unit 744 further comprises:
an under-voltage lockout detection unit 730 electrically connected to the rectifier 40 and the anode of the diode 702; and
an under-voltage lockout input side 732 electrically connected to the under-voltage lockout detection unit 730, the power conversion unit 706 and the isolationcontrol interface 712.

5. The power supply module 70 in claim 2, wherein the power processing unit 742 comprises:
a diode 702, an anode of the diode 702 electrically connected to the rectifier 40;
an input side filtering capacitor 704 electrically connected to a cathode of the diode 702 and the energy saving lamp 52; and
an electronic switch 718 electrically connected to the energy saving lamp 52,
wherein the state potential unit 744 further comprises:
a bias unit 720 electrically connected to the rectifier 40 and the anode of the diode 702; and
a switch control input side 722 electrically connected to the bias unit 720, the electronic switch 718 and the isolationcontrol interface 712.

6. The power supply module 70 in claim 2, wherein the power processing unit 742 comprises:
a power conversion unit 706 electrically connected to the rectifier 40 and the energy saving lamp 52,
wherein the state potential unit 744 further comprises:
a starting input side 710 electrically connected to the power conversion unit 706 and the isolationcontrol interface 712.

7. The power supply module 70 in claim 2, wherein the power processing unit 742 comprises:
a power conversion unit 706 electrically connected to the rectifier 40 and the energy saving lamp 52,
wherein the state potential unit 744 further comprises:
an under-voltage lockout input side 732 electrically connected to the power conversion unit 706 and the isolationcontrol interface 712.

8. The power supply module 70 in claim 2, wherein the power processing unit 742 comprises:
a power conversion unit 706 electrically connected to the rectifier 40 and the energy saving lamp 52,
wherein the state potential unit 744 further comprises:
an over voltage protection input side 724 electrically connected to the power conversion unit 706 and the isolationcontrol interface 712.

9. The power supply module 70 in claim 2, wherein the power processing unit 742 comprises:
a power conversion unit 706 electrically connected to the rectifier 40 and the energy saving lamp 52,
wherein the state potential unit 744 further comprises:
an over currentprotection input side 726 electrically connected to the power conversion unit 706 and the isolationcontrol interface 712.

10. The power supply module 70 in claim 1, wherein the power processing unit 742 comprises:
an electronic switch 718 electrically connected to the rectifier 40 and the energy saving lamp 52,
wherein the state potential unit744 comprises:
a switch control input side 722 electrically connected to the electronic switch 718 and the switching apparatus 10.

11. The power supply module 70 in claim 2, wherein the power processing unit 742 comprises:
a diode 702, an anode of the diode 702 electrically connected to the rectifier 40;
a power factor corrector 728 electrically connected to a cathode of the diode 702; and
a power conversion unit 706 electrically connected to the power factor corrector 728 and the energy saving lamp 52,
wherein the state potential unit 744 further comprises:
a starting unit 708 electrically connected to the rectifier 40 and the anode of the diode 702; and
a starting input side 710 electrically connected to the starting unit 708, the power conversion unit 706 and the isolationcontrol interface 712.

12. The power supply module 70 in claim 2, wherein the power processing unit 742 comprises:
a diode 702, an anode of the diode 702 electrically connected to the rectifier 40;
a power factor corrector 728 electrically connected to a cathode of the diode 702; and
a power conversion unit 706 electrically connected to the power factor corrector 728 and the energy saving lamp 52,
wherein the state potential unit 744 further comprises:
an under-voltage lockout detection unit 730 electrically connected to the rectifier 40 and the anode of the diode 702; and
an under-voltage lockout input side 732 electrically connected to the under-voltage lockout detection unit 730, the power conversion unit 706 and the isolationcontrol interface 712.

13. The power supply module 70 in claim 2, wherein the power processing unit 742 comprises:
a power factor corrector 728 electrically connected to the rectifier 40; and
a power conversion unit 706 electrically connected to the power factor corrector 728 and the energy saving lamp 52,
wherein the state potential unit 744 further comprises:
a starting unit 708 electrically connected to the rectifier 40 and the power factor corrector 728; and
a starting input side 710 electrically connected to the starting unit 708, the power conversion unit 706 and the isolationcontrol interface 712.

14. The power supply module 70 in claim 2, wherein the power processing unit 742 comprises:
a power factor corrector 728 electrically connected to the rectifier 40; and
a power conversion unit 706 electrically connected to the power factor corrector 728 and the energy saving lamp 52,
wherein the state potential unit 744 further comprises:
a nunder-voltage lockout detection unit 730 electrically connected to the rectifier 40 and the power factor corrector 728; and
an under-voltage lockout input side 732 electrically connected to the under-voltage lockout detection unit 730, the power conversion unit 706 and the isolationcontrol interface 712.

15. The power supply module 70 in claim 2, wherein the power processing unit 742 comprises:
a boost active power factor corrector 734 electrically connected to the rectifier 40; and
a power conversion unit 706 electrically connected to the boost active power factor corrector 734 and the energy saving lamp 52,
wherein the state potential unit 744 further comprises:
a starting unit 708 electrically connected to the boost active power factor corrector 734; and
a starting input side 710 electrically connected to the starting unit 708, the power conversion unit 706 and the isolationcontrol interface 712,
wherein the boost active power factor corrector 734 comprises:
a control module 736 electrically connected to the rectifier 40 and the starting unit 708;
a boost diode 738, an anode of the boost diode 738 electrically connected to the control module 736 and the starting unit 708; and
an energy storage capacitor 740 electrically connected to a cathode of the boost diode 738 and the power conversion unit 706.

16. The power supply module 70 in claim 2, wherein the power processing unit 742 comprises:
a boost active power factor corrector 734 electrically connected to the rectifier 40; and
a power conversion unit 706 electrically connected to the boost active power factor corrector 734 and the energy saving lamp 52,
wherein the state potential unit 744 further comprises:
an under-voltage lockout detection unit 730 electrically connected to the boost active power factor corrector 734; and
an under-voltage lockout input side 732 electrically connected to the under-voltage lockout detection unit 730, the power conversion unit 706 and the isolationcontrol interface 712,
wherein the boost active power factor corrector 734 comprises:
a control module 736 electrically connected to the rectifier 40 and the under-voltage lockout detection unit 730;
a boost diode 738, an anode of the boost diode 738 electrically connected to the control module 736 and the under-voltage lockout detection unit 730; and
an energy storage capacitor 740 electrically connected to a cathode of the boost diode 738 and the power conversion unit 706.
